# EUROPÄISCHE PATENTSCHRIFT

(11) **EP 3 473 431 B1**
(45) Veröffentlichungstag und Bekanntmachung des Hinweises auf die Patenterteilung: **03.06.2020**
(21) Anmeldenummer: 18190329.5
(22) Anmeldetag: 22.08.2018
(51) Int. Cl.: B32B 7/00, C23C 28/04, F01D 5/14

(54) **SCHAUFEL UND ROTOR FÜR EINE STRÖMUNGSMASCHINE SOWIE STRÖMUNGSMASCHINE**
TURBOMACHINE AND BLADE AND ROTOR FOR A TURBOMACHINE
PALE ET ROTOR POUR UNE TURBOMACHINE AINSI QUE TURBOMACHINE

(30) Priorität: 23.10.2017 DE 102017218886
(43) Veröffentlichungstag der Anmeldung: 24.04.2019
(73) Patentinhaber: MTU Aero Engines AG, 80995 München (DE)
(72) Erfinder: Horn, Wolfgang, West Hartford, 06107 (US); Theurich, Daniel, 82131 Stockdorf (DE); Becker, Martin, 85221 Dachau (DE); Stettner, Axel, 85221 Dachau (DE); Schütte, Wilfried, 82041 Oberhaching-Furth (DE); Junge, Michael, 80995 München (DE); Hackenberg, Hans-Peter, 82140 Olching (DE); Wolf, Hannes, 82291 Mammendorf (DE); Halcoussis, Alexander, 85778 Haimhausen (DE)

(56) Entgegenhaltungen:
- EP-A1- 1 525 942
- EP-A1- 1 757 773
- DE-A1-102010 060 152
- JP-A- H1 061 406
- JP-A- 2000 130 103

## Beschreibung

Die Erfindung betrifft eine Schaufel und einen Rotor für eine Strömungsmaschine. Die Erfindung betrifft weiterhin eine Strömungsmaschine mit wenigstens einer solchen Schaufel beziehungsweise mit wenigstens einem solchen Rotor.

Schaufeln in rotierenden Strömungsmaschinen unterliegen hohen mechanischen Lasten, die insbesondere durch Fliehkräfte, Schwingungen und Thermalgradienten hervorgerufen werden. Bei lokaler Überbeanspruchung können Risse im Material der Schaufeln auftreten, die unter Einfluss der mechanischen und thermischen Spannungen in das Bauteil wachsen. Insbesondere bei integral beschaufelten Rotoren, beispielsweise bei Blisks (bladed disk) oder Blings (bladed ring) bestehen Schaufeln und Scheibe beziehungsweise Ring aus einem integralen oder monolithischen Bauteil. Weiterhin muss berücksichtigt werden, dass Objekte in das Triebwerk eintreten können und an den Schaufeln bei einem Auftreffen einen Riss verursachen können. Insbesondere aufgrund der Kombination dieser Umstände können Risse von den Schaufeln in den Scheiben- oder Ringkörper wandern und unter Umständen sogar ein Versagen des gesamten Bauteils herbeiführen.

Die Rotoren und Blisks sind auf einer Triebwerkswelle angeordnet, mit der sie um eine Triebwerksachse rotieren. Zur Beschreibung der in den Triebwerken vorkommenden Geometrien sind daher drei Hauptachsen definiert. Die erste Hauptachse verläuft in Richtung der Triebwerksdrehachse und wird auch als Längsachse bezeichnet, die in Axialrichtung verläuft. Durch die erste Hauptachse wird ein Vorne und ein Hinten der jeweils betrachteten Geometrie festgelegt, wobei vorne der Eintritt und hinten der Austritt des Strömungsgases erfolgt. Die zweite Achse verläuft entlang einer auf der Triebwerksdrehachse senkrecht stehenden Richtung und wird auch als Radialachse bezeichnet, die in Radialrichtung verläuft. Durch die zweite Hauptachse wird ein Außen und ein Innen des Triebwerks bestimmt, wobei innen die Triebwerksachse liegt und die Radialrichtung von der Triebwerksachse nach außen verläuft. Die dritte Hauptachse verläuft in Umfangsrichtung senkrecht zu den beiden anderen Hauptachsen und verbindet die durch die ersten beiden Hauptachsen gebildeten Meridianschnitte. Die drei Hauptachsen bestimmen zusammen drei Hauptebenen: Meridianebenen, die von der Längsachse und jeweils einer Radialachse aufgespannt sind; Umfangsebenen, die auf einer Zylindermantelfläche um die Drehachse liegen; und Querschnittebenen des Triebwerks, die normal zu der Triebwerksdrehachse angeordnet sind.

Schaufeln mit komplexer räumlicher Geometrie werden normalerweise durch übereinander gestapelte Schaufelprofile beschrieben, deren Profilflächenerstreckungen nicht zwingend in nur einer Umfangsebene liegen müssen, sondern als geschwungen ausgeführte Schaufelprofile auch die anderen Hauptebenen schneiden können. Diese Gestaltung ist hauptsächlich der aerodynamischen Konstruktion der Schaufeln und der Vorgaben an den Hauptströmungskanal, dessen Ränder, insbesondere das Innendeckband, nicht achsparallel zur Hauptachse verlaufen müssen, geschuldet. Die endgültige Form, insbesondere im Naben- beziehungsweise Deckbandbereich, weicht zusätzlich aus strukturmechanischen Gründen von diesem aerodynamisch optimierten, insbesondere idealen, Schaufelprofil ab; in den meisten Fällen sind in diesem Deckbandbereich sogenannte Fillets angeordnet. Die geometrischen Schwerpunkte der aerodynamisch optimierten Schaufelprofile bilden eine Stapellinie, wobei die Stapellinie ein Maß für die Neigung (engl. "pitch") der Schaufel darstellt.

Schaufelprofile werden ferner durch eine von der Vorderkante zu der Hinterkante des Schaufelprofils verlaufende Skelettlinie (engl. "camber line"), sowie durch die das Schaufelprofil umlaufenden und typischerweise eine Tropfenform mit Saug- und Druckseite bildenden Randlinien an der Schaufeloberfläche beschrieben.

Die Skelettlinie ist die Profilmittellinie von der Vorderkante zu der Hinterkante der Schaufel und entspricht einer Verbindungslinie durch alle Mittelpunkte von in das Schaufelprofil einbeschriebenen Kreisen. Diese Verbindungslinie kann in einfachster Näherung durch aneinandergereihte Geraden, aber auch durch Splines oder andere polynomiale Kurven durch die Mittelpunkte, beschrieben werden. Bei einer axialen Unterteilung der Schaufel in hundert Teile und mehr, beispielsweise durch hundert axial äquidistant zu einander beabstandete einschreibende Kreise und entsprechende Verbindung der Kreismittelpunkte durch Geraden, ist eine hinreichende Genauigkeit für den Verlauf der Skelettlinie erreicht, die einen zumindest ersten Anhaltspunkt bei der Bestimmung der geometrischen Lagen der beteiligten Punkte dienen kann.

Vorder- und Hinterkante können ebenfalls durch Kreisabschnitte gebildet werden, da man in Strömungsmaschinen und gerade in den Hauptgaskanälen dieser Strömungsmaschinen scharfe Kanten vermeiden möchte. Nachfolgend sollen Vorderkante und Hinterkante aber auf eine Linie, das heißt eine Aneinanderreihung von Punkten auf der Oberfläche der Schaufel reduziert sein. Um einen Punkt dieser Vorderkantenlinie beziehungsweise Hinterkantenlinie auf einem Profil als Vorderkantenpunkt beziehungsweise als Hinterkantenpunkt festzulegen, dient folgendes Verfahren. Es lassen sich einschreibende Kreise bis an die Vorder- beziehungsweise Hinterkante der Schaufeln legen. An der Vorderkante und an der Hinterkante verläuft die Skelettlinie von dem Vorderkantenkreismittelpunkt bzw. von dem Hinterkantenkreismittelpunkt gerade in Richtung auf die Vorder- bzw. Hinterkante zu. In guter Näherung entspricht diese Richtung der Richtung der Verbindungslinie des vorletzten zum letzten Kreismittelpunkt der jeweiligen einschreibenden Kreise, weil in diesem Bereich mit einem stetigen und konvergierenden Verlauf der Skelettlinie zu rechnen ist, wenn die Kreismittelpunkte ausreichend nahe beieinander liegen, das heißt wenn die Staffelung der betrachteten Geometriepunkt ausreichend fein ist. Diese Definition dient zur Bestimmung der Vorder- und Hinterkante insbesondere bei unbekannter Schaufelgeometrie, das heißt nicht aus der Konstruktion vorliegenden Daten zu der Schaufelgeometrie. Eine von der Vorderkante zu der Hinterkante aufgespannte gerade Linie wird als Schaufelsehne (engl. "chord) bezeichnet.

Es wird zur Bestimmung der quantitativen Größen als hinreichend approximiert angesehen, wenn die Lage der zu bestimmenden Punkte der entsprechenden Schaufelgröße (axiale Erstreckung, radiale Erstreckung, Umfangserstreckung) zumindest auf ein Hundertstel der Ausdehnung der Schaufel in der entsprechenden Raumrichtung genau bestimmt werden kann. Wenn es Anhaltspunkte dafür gibt, dass eine feinere Staffelung nötig wäre oder betrachtete Geometrien sehr eng an dieser Beschreibung und in den Ansprüchen genannte Werte heranreichen, sollte diese Approximation entsprechend verfeinert werden.

Als maximale Profildicke eines Profils wird der größtmögliche Kreisdurchmesser eines Kreises zwischen Profilsaugseite und Profildruckseite bezeichnet, wobei der Mittelpunkt dieses größten Kreises auf der Skelettlinie angeordnet ist.

Eine Anbindungsfläche zu einer Rotornabe bzw. zu einem Rotordeckband wird als Schaufelfuß bezeichnet.

Da man bemüht ist, Verwirbelungen und damit Verluste in Triebwerken möglichst gering zu halten und ungewollte Spannungen im Material der Schaufeln und der Nabe, die auch als Deckband oder Innendeckband bezeichnet wird, zu vermeiden oder zu verteilen, so dass die ungewollten Spannungen unschädlich sind, werden die Übergänge von der Schaufel zu der Rotornabe im Bereich des Schaufelfußes - durch das Vorsehen eines Fillets - stetig ausgestaltet. Dadurch entstehen von dem aerodynamisch idealen beziehungsweise optimierten Schaufelprofil abweichende Geometrien, so dass die genaue Lage der Vorder- und Hinterkante durch das oben beschriebene Vorgehen möglicherweise nicht mehr eindeutig bestimmt werden kann, denn die Kreisformen der Schaufelenden an der Vorderkante und an der Hinterkante werden durch das Vorhandensein eines Fillets, also einer von einer aerodynamisch optimierten Form abweichenden Form der Schaufel, aufgelöst. Erschwerend kommt hinzu, dass die bei der Konstruktion berechneten Schaufelprofile nicht entlang einer zylindrischen Umfangsebene definiert sind, sondern diese schneiden können. Ferner kann im Bereich des Schaufelfußes die Naben- beziehungsweise Deckbandkonturierung (engl. "endwall contouring") des Rotorgrundkörpers an die Strömung angepasst sein, was wiederum erschwerend für das Auffinden des Beginns des Fillets ist.

Bei der Bestimmung der Größen einer solchen zu vermessenden Schaufel, insbesondere einer Anbindungsstruktur wie ein Fillet, können die Oberflächen der Schaufel und des Deckbandes sowie des Übergangs zwischen Schaufel und Deckband beispielsweise optisch vermessen werden. Die genaue Lage der Vorder- und Hinterkante, der genaue Anbindungsbereich von dem aerodynamisch idealen Profil auf ein Fillet und der Anbindungsbereich von dem Fillet auf die Rotornabe sind dennoch nur schwer zu bestimmen. Innen liegende Größen sind in der Regel nicht bekannt und die Übergange an der Oberfläche von Schaufelfuß auf das Fillet und weiter auf die Nabe sind aufgrund der aerodynamischen Form der Schaufel stetig, das heißt ein genauer Übergangspunkt ohne Kenntnisse der Strömung und dem Auslegungspunkt der Schaufeln ist ebenfalls nur schwer genau zu bestimmen.

Um ein Bestimmen der quantitativen Größen von zu vermessenden Schaufeln bei Unkenntnis der aerodynamischen Verhältnisse und der konstruktiven Überlegungen zunächst hinreichend in guter Näherung zu ermöglichen, werden Schnitte durch die Schaufel herangezogen, die in einer der Hauptebenen liegen, wobei eine Staffelung der Abstände zur näherungsweisen Bestimmung der betrachteten Geometrien entlang der drei Hauptachsen jeweils mindestens um ein Hundertstel von der größten Längserstreckung der Schaufel, der größten Radialerstreckung der Schaufel und der größten Umfangserstreckung der Schaufel erfolgt. Mit anderen Worten wird ein Gitter (analog zu einem Gitter bei einer Finiten Elemente Methode, abgekürzt FEM) mit einer Feinheit von in jeweils mindestens hundert Schritten in allen drei Hauptrichtungen, nämlich zwischen dem vordersten und hintersten Punkt der Schaufel, den am weitesten innen und außen liegenden Punkten der Schaufel sowie zwischen den in Umfangsrichtung am weitesten auseinander liegenden Punkten der Schaufel gelegt.

Die größten Umfangs- und Axialerstreckungen der Schaufel sind an der Nabe zu erwarten, weil dort der Anbindungsbereich von dem Schaufelfuß zu dem Rotorgrundkörper erfolgt und der Schaufelfuß die größte Ausdehnung aufweist.

Um den axialen Beginn und das axiale Ende, also die Anbindungspunkte, des Schaufelfußes in axialer Richtung zu bestimmen, ist die Kontur der Oberfläche im Bereich der Nabe zu betrachten. Liegt in beziehungsweise entgegen der axialen Richtung an den Anbindungsbereich angrenzend eine Vertiefung vor, so wird der Anbindungspunkt des Schaufelfußes auf die Nabe ein Wendepunkt der Oberfläche sein. Liegt in beziehungsweise entgegen der axialen Richtung eine Erhöhung vor, so wird der Anbindungspunkt ein minimaler radialer Abstand der Oberfläche zu der Rotordrehachse sein. Liegt in der betrachteten Ebene eine Erstreckung mit einem linearen Verlauf vor, so wird der Anbindungspunkt durch einen Beginn einer Krümmung definiert.

Um den Umfangsbeginn oder das Umfangsende des Schaufelfußes in Umfangsrichtung zu bestimmen, ist die Kontur der Oberfläche im Bereich der Nabe zu betrachten. Ein Übergang von der Oberfläche der Nabe auf eine Anbindungsstruktur, beispielsweise ein Fillet, kann in einem Bereich erwartet werden, in dem sich die Krümmung der Oberfläche ändert. Liegt in beziehungsweise entgegen der Umfangsrichtung an den zu erwartenden Bereich, in dem sich der Übergang befinden soll, angrenzend eine Vertiefung vor, so wird der Übergangspunkt des Schaufelfußes auf die Nabe ein Wendepunkt der Oberfläche sein. Liegt in beziehungsweise entgegen der Umfangsrichtung eine Erhöhung vor, so wird der Übergangspunkt ein minimaler radialer Abstand der Oberfläche zu der Rotorachse sein. Liegt in der betrachteten Ebene eine Erstreckung mit einem linearen Verlauf vor, so wird der Übergangspunkt durch einen Beginn einer Krümmung definiert.

Der axiale Beginn und das axiale Ende des Schaufelfußes sowie der Umfangsbeginn und das Umfangsende des Schaufelfußes sind Punkte, die jeweils einen radialen Abstand zu der Drehachse der Strömungsmaschine aufweisen. Über denjenigen dieser Punkte mit dem geringsten radialen Abstand lässt sich eine Umfangsebene als Zylindermantelfläche definieren, die im Folgenden ein Hilfsdeckband der Nabe definiert und als Anknüpfungspunkt für die Ermittlung der radialen Erstreckung der Schaufel, so auch der maximalen radialen Erstreckung, in erster Näherung dient.

Die größte radiale Erstreckung des Schaufelblatts lässt sich dann hilfsweise durch Bilden eines weiteren Zylinders um die Triebwerksdrehachse bilden, dessen Mantelfläche nur einen einzigen, nämlich den äußersten Punkt der Schaufel schneidet.

Aus diesen maximalen Erstreckungen lassen sich die Staffelungen oder Gitter für die Bestimmung sämtlicher Größen der Schaufel wie oben angegeben herleiten, insbesondere Gitter deren Kantenlängen jeweils ein Hundertstel oder weniger von der maximalen Längs-, Radial- und Umfangserstreckung der Schaufel betragen.

Um einen Anbindungspunkt von dem Schaufelblatt auf eine Anbindungsstruktur, zum Beispiel einem Fillet mit oder ohne Rissbeeinflussungseinrichtung, des Schaufelblatts auf das Deckband bei unbekannten Strömungsverhältnissen oder ohne Kenntnis der zugrundeliegenden strukturmechanischen Überlegungen zu bestimmen, wird die Schaufel wie oben beschrieben in eine Gitterunterteilung der Meridianebenen, der Querschnittsebenen sowie der Umfangsebenen eingefasst. Es werden dann für die Bestimmung der Anbindungspunkte von Schaufelblatt zu der Anbindungsstruktur in erster Näherung diejenigen Punkte der Schaufeloberfläche in dem Bereich, in dem der Beginn der Anbindungsstruktur zu erwarten ist bestimmt, die gegenüber zumindest einem entlang der Oberfläche betrachtet radial äußeren und inneren Nachbarpunkten eine größere Krümmungsänderung aufweisen. Für die Bestimmung der Anbindungspunkte von der Anbindungsstruktur auf das Deckband wird analog verfahren, wobei hier sowohl die in axialer Richtung als auch in Umfangsrichtung benachbarten Punkte auf der Oberfläche der Schaufel beziehungsweise des Deckbandes zum Vergleich der Krümmungsänderung herangezogen werden.

Nach Bestimmung der Anbindungsbereiche sollten nunmehr die vermessenen Oberflächen sowie Anfang und Ende der Anbindungsstruktur in radialer Richtung bekannt sein. In der jeweiligen Umfangsebene der Vorderkante und der Hinterkante kann eine Erweiterungslinie, die auch als Extrusionslinie bezeichnet werden kann, der zur Bestimmung der Vorderkante beziehungsweise Hinterkante herangezogenen Geraden erzeugt werden. Von dieser Erweiterungslinie kann auf die Anbindungsstruktur bis zum Schaufelfuß eine Linie in radialer Richtung projiziert werden, die im Folgenden auf der Anbindungsstruktur als Vorderkante beziehungsweise Hinterkante dienen soll. In den Fällen, in denen die Schaufeln und deren Anbindungsstrukturen aufgrund einer geometrischen Begrenzung der Scheibe in axialer Richtung durchschnitten sind, kann es zwei Vorderkanten oder Hinterkanten in diesem Bereich geben, von denen an die entsprechenden anderen Größen zur Beschreibung der Anbindungsstruktur zu bestimmen sind. Entlang jedem der Anbindungsbereiche können jeweils zwischen Vorderkante und Hinterkante zumindest jeweils hundert Gitterpunkte gelegt werden, wobei zwei gegenüberliegende Punkte der beiden auf entweder der Saugseite oder der Druckseite angeordneten Anbindungsbereiche entlang der gemessenen Oberfläche verbunden werden, so dass eine entsprechend feine Unterteilung der Anbindungsstruktur ermöglicht wird. Hieraus lassen sich die Ausdehnungen der in dieser Anmeldung beschriebenen Bereiche der Anbindungsstruktur und dessen Varianten zumindest in erster Näherung bestimmen.

Bei den oben beschriebenen Verfahren zur Bestimmung der Größen und Lagen handelt es sich um erste Näherungsverfahren, um eine unbekannte Schaufel einordnen zu können. Eine Überprüfung sollte wenn geboten in einem weiteren Schritt möglichst anhand der genauen Geometrie und der Kenntnis der Anbindungen vorgenommen werden. Genauere Ergebnisse liefert das Heranziehen tatsächlicher Größen beispielsweise aus Konstruktionszeichnungen.

In der WO 2012/055881 A1 ist eine Beschichtung beschrieben, die zur Beeinflussung des Rissverhaltens aus mehreren Einzelschichten zusammengesetzt ist, die eine keramische Hauptschicht und eine quasi-duktile, nicht metallische Zwischenschicht umfassen, wobei Poren, Materialeinschlüsse oder Mikrorisse zur Ablenkung der sich bildenden Risse führen.

Aus der US 9,920,633 B2 ist ein Kompositfillet (engl. "compound fillet"), das heißt ein Fillet mit zwei unterschiedlichen Radien, die tangential ineinander übergehen, bekannt. Nachteilig kann ein Riss durch diese Struktur nicht beeinflusst werden.

Die EP 1 525 942 A1 offenbart eine Schaufel, die entgegen der Richtung eines Gasstroms positioniert und mit einer Plattform auf einer Basis verbunden ist. Sie besteht aus einem Blech, das um eine vertikale Achse gebogen ist, um eine gekrümmte Vorderseite zu bilden und einen seitlichen Bereich, der als Saugzone dient. Eine gegenüberliegende Seite dient als Druckbereich. Beide Segmente treffen sich hinten und bilden eine vertikale Kante. Im hinteren Bereich der Schaufel befindet sich nahe der Plattform ein vertikaler Schlitz, um den beim Auftreten eines Risses auf die Schaufel wirkenden Kräften entgegenzuwirken.

Die EP 1 757 773 A1 offenbart eine Turbinenschaufel mit einer saugseitigen und einer druckseitigen Profilwand. Heißgas strömt über das Trägeroberflächenprofil. Innerhalb der Schaufel befinden sich Stützrippen, die die beiden Wände in einem Verbindungsbereich verbinden. In der Profilwand befindet sich heißgasseitig gegenüber dem Anschlussbereich ein Schlitz.

Die DE 10 2010 060152 A1 offenbart betrifft eine Verschleißschutzbeschichtung, speziell für erosionsbelastete Bauteile unter mechanischer Beanspruchung, insbesondere für Gasturbinenbauteile, die mindestens zwei verschiedene, vorzugsweise einander mehrfach abwechselnden, auf einer zu beschichtenden Oberfläche eines Bauteils aufgebrachte Einzelschichten umfasst. Die Einzelschichten umfassen eine keramische Hauptschicht und eine quasi-duktile, nichtmetallische Zwischenschicht.

Aufgabe der vorliegenden Erfindung ist es, den Rissfortschritt in Schaufeln und Rotoren von Strömungsmaschinen besser zu begrenzen. Eine weitere Aufgabe der Erfindung ist es, eine Strömungsmaschine mit wenigstens einer solchen Schaufel beziehungsweise wenigstens einem solchen Rotor mit verringertem Rissfortschrittspotenzial bereitzustellen.

Die Aufgaben werden erfindungsgemäß durch eine Schaufel mit den Merkmalen des Patentanspruchs 1, durch eine Blisk gemäß Patentanspruch 13 sowie durch eine Strömungsmaschine gemäß Patentanspruch 14 gelöst. Besonders vorteilhafte Ausgestaltungen mit zweckmäßigen Weiterbildungen der Erfindung sind in den jeweiligen Unteransprüchen angegeben, wobei vorteilhafte Ausgestaltungen jedes Erfindungsaspekts als vorteilhafte Ausgestaltungen der jeweils anderen Erfindungsaspekte anzusehen sind.

Ein erster Aspekt der Erfindung betrifft eine Schaufel gemäß Anspruch 1 für eine Strömungsmaschine, beispielsweise für ein Flugtriebwerk. Die Schaufel umfasst ein Schaufelblatt mit einer Saugseite und einer Druckseite, die sich zwischen einer Vorderkante und einer Hinterkante des Schaufelblatts erstrecken, sowie einen Schaufelfuß zur Anbindung der Schaufel an einen Rotorgrundkörper. Eine Verringerung des Rissfortschrittspotenzials wird erfindungsgemäß dadurch erreicht, dass die Schaufel eine Rissbeeinflussungseinrichtung, insbesondere eine Risslenkungseinrichtung und/oder Rissverlangsamungseinrichtung, umfasst, welche in zumindest radialer Richtung eine veränderte Querschnittsgeometrie gegenüber einem aerodynamisch optimierten Schaufelprofil aufweist. Die Rissbeeinflussungseinrichtung weist zumindest zwei Profilbereiche auf, wobei zumindest ein erster Profilbereich der mindestens zwei Profilbereiche um die Schaufel von einer Schaufelvorderkante zu einer Schaufelhinterkante zumindest teilweise verläuft, so dass ein Vollbereich, ein Auslaufbereich und ein freier Bereich ausgebildet sind. Der Vollbereich zeichnet sich dadurch aus, dass die Rissbeeinflussungseinrichtung vollständig ausgebildet ist. In dem freien Bereich ist keine Rissbeeinflussungseinrichtung ausgebildet, mit anderen Worten, in dem freien Bereich ist beispielsweise nur ein Standardfillet ausgebildet. In dem Auslaufbereichbereich geht die Rissbeeinflussungseinrichtung in das Standardfillet über beziehungsweise läuft aus. In dem Auslaufbereich kann sich vorteilhaft die Podestdicke und/oder die Podesthöhe null annähern oder null betragen, wodurch sich vorteilhaft auf einfache Weise die Steilheit beziehungsweise die Flachheit der beiden Profilbereiche und auch des Übergangsbereich einstellen lässt, so dass die Rissausbreitung noch gezielter beeinflusst werden kann. Die Ausdehnung des Vollbereichs entlang der axialen Erstreckung der Druckseite und/oder der Saugseite liegt in einem Bereich, der mindestens 30% der Erstreckung der Druckseite beziehungsweise der Saugseite entspricht. Alternativ oder zusätzlich liegt die Ausdehnung des freien Bereichs entlang der axialen Erstreckung der Druckseite und/oder der Saugseite in einem Bereich, der mindestens 5% der Erstreckung der Druckseite beziehungsweise der Saugseite entspricht. Sowohl eine Risslenkungseinrichtung als auch eine Rissverlangsamungseinrichtung beeinflussen das Rissfortschrittspotenzial, so dass diese Begriffe zumindest gegebenenfalls auch synonym verwendet werden können. Die Rissbeeinflussungseinrichtung kann auch als Rissbeeinflussungsfillet bezeichnet werden (engl. "crack affecting fillet"), denn die Rissbeeinflussungseinrichtung ist insbesondere am Schaufelfuß angeordnet und aus einem Standardfillet geformt beziehungsweise ersetzt oder ergänzt ein Standardfillet und bildet so zumindest einen Teil einer Anbindungsstruktur des Schaufelblatts an ein Rotordeckband. Es versteht sich, dass auch eine Rissbeeinflussungseinrichtung immer eine Risslenkungseinrichtung in dem Sinne sein kann, dass der Verlauf des Risses gesteuert beziehungsweise kontrolliert beziehungsweise dessen Ausbreitungsgeschwindigkeit gelenkt wird. Mit anderen Worten ist es erfindungsgemäß vorgesehen, dass das Fortschreiten eines eventuell auftretenden Risses im Schaufelblatt durch die Rissbeeinflussungseinrichtung in Form einer vorzugsweise plötzlichen positiven Querschnittsänderung der Schaufel in zumindest radialer Richtung verhindert oder verlangsamt wird, da die Rissbeeinflussungseinrichtung aufgrund der Querschnittsänderung zu einem lokalen Steifigkeitssprung führt und so die Rissausbreitung von der Scheibe fort lenkt und/oder die Rissausbreitung in Richtung auf die Scheibe zu beziehungsweise Radialrichtung verlangsamt oder stoppt. Die spezielle Geometriegestaltung der Rissbeeinflussungseinrichtung kann gezielt die Mittelspannung sowie die Schwingspannungen im Übergangsbereich zwischen Schaufel und Schaufelfuß beziehungsweise im montierten oder gefügten Zustand der Schaufel die Schwingspannungen im Übergangsbereich zwischen der Schaufel und dem mit dieser verbundenen Rotorgrundkörper beeinflussen. Die im Betrieb einer Strömungsmaschine auftretenden hohen Umfangsmittelspannungen im Rotorgrundkörper können mit Hilfe der Rissbeeinflussungseinrichtung vorteilhaft von den hohen Schwingspannungen im Schaufelblatt getrennt werden. Auf diese Weise beeinflusst der Steifigkeitssprung durch die Rissbeeinflussungseinrichtung die Ausbreitungsrichtung und/oder die Ausbreitungsgeschwindigkeit eines im Schaufelblatt oder im Bereich des Schaufelfußes beziehungsweise im Übergangsbereich zu einem Rotorgrundkörper ausgehenden Risses. Im Fall einer Rissausbreitung wird entweder das Rissfortschrittspotenzial begrenzt oder im Versagensfall lediglich die Schaufel vom Rotorgrundkörper abgetrennt. Damit wird verhindert, dass ein Riss von der Schaufel in den Rotorgrundkörper wachsen kann. Generell sind "ein/eine" im Rahmen dieser Offenbarung als unbestimmte Artikel zu lesen, also ohne ausdrücklich gegenteilige Angabe immer auch als "mindestens ein/mindestens eine". Umgekehrt können "ein/eine" auch als "nur ein/nur eine" verstanden werden.

In einer vorteilhaften Ausgestaltung der Erfindung ist vorgesehen, dass die Rissbeeinflussungseinrichtung wenigstens eine das Schaufelblatt in axialer Richtung teilweise oder vollständig umlaufende Vertiefung umfasst. Die Vertiefung ist ein erster Profilbereich der Rissbeeinflussungseinrichtung. Eine solche Vertiefung, die auch als Kerbe, Groove oder negative Querschnittsänderung bezeichnet werden kann, erzeugt einerseits eine Sollbruchstelle im Schaufelblatt, durch welche ein Rißfortschritt in einen Rotorgrundkörper effektiv verhindert wird, und reduziert andererseits vorteilhaft die während des Betriebs auftretenden Schwingspannungen in den angrenzenden Bauteilbreichen. Die Vertiefung kann sich grundsätzlich entlang von 10 %, 15 %, 20 %, 25 %, 30 %, 35 %, 40 %, 45 %, 50 %, 55 %, 60 %, 65 %, 70 %, 75 %, 80 %, 85 %, 90 %, 95 % oder 100 % des Gesamtumfangs des Schaufelblatts im betreffenden Bereich erstrecken, wobei entsprechende Zwischenwerte wie beispielsweise 50 %, 51 %, 52 %, 53 %, 54 %, 55 %, 56 %, 57 %, 58 %, 59 %, 60 % usw. als mitoffenbart anzusehen sind. Die Vertiefung kann grundsätzlich einen konstanten oder variablen Abstand zum Schaufelfuß aufweisen. Ebenso können zwei oder mehr derartige Vertiefungen vorgesehen sein, wodurch ein gewünschtes Sollbruchverhalten besonders exakt eingestellt werden kann.

In einer weiteren vorteilhaften Ausgestaltung der Erfindung ist vorgesehen, dass die Vertiefung entlang ihrer axialen Erstreckung eine konstante oder variable Querschnittsgeometrie, insbesondere eine konstante oder variable radiale Höhe und/oder eine konstante oder variable maximale Tiefe, aufweist. Dies erlaubt eine besonders präzise Einstellung der Steifigkeit, des Schwingungsverhaltens und des Rissfortschrittspotenzials.

Weitere Vorteile im Hinblick auf ein vorteilhaftes Rissfortschrittspotenzial ergeben sich, indem die Vertiefung radial oberhalb eines Fillets, das im Anbindungsbereich des Schaufelblatts an den Schaufelfuß ausgebildet ist, angeordnet ist. Unter einem Fillet werden Ausrundungen zwischen dem Schaufelfuß beziehungsweise einem radial inneren beziehungsweise unteren Deckband und dem Schaufelblatt verstanden, die in diesem radialen Anbindungs- beziehungsweise Übergangsbereich des Schaufelblatts zum Schaufelfuß zur Spannungsverringerung dienen. Im Rahmen der vorliegenden Offenbarung wird unter "radial außen" beziehungsweise "radial oben" grundsätzlich eine Richtung zu einer Schaufelspitze hin und unter "radial innen" beziehungsweise "radial unten" eine Richtung zum Schaufelfuß hin verstanden. "Radial oberhalb" bedeutet damit, dass das betreffende Element näher in Richtung der Schaufelspitze liegt, während "radial unterhalb" bedeutet, dass das betreffende Element näher in Richtung des Schaufelfußes liegt. Die Begriffe "radial" und "axial" beziehen sich grundsätzlich auf eine Drehachse eines Rotors einer Strömungsmaschine, welcher bestimmungsgemäß mit der erfindungsgemäßen Schaufel versehen ist. Demgemäß ist auch die hierin verwendete Umfangsrichtung auf die Drehachse der Strömungsmaschine bezogen.

In einer weiteren vorteilhaften Ausgestaltung der Erfindung ist vorgesehen, dass die Rissbeeinflussungseinrichtung ein Podest umfasst, wobei das Podest zwischen dem Schaufelblatt und dem Schaufelfuß angeordnet ist und eine größere Querschnittsdicke als das Schaufelblatt aufweist. Mit anderen Worten ist es vorgesehen, dass die Rissbeeinflussungseinrichtung einen im Querschnitt gegenüber dem Schaufelblatt verdickten, das heißt mit einer positiven Querschnittsänderung versehenen Podestbereich aufweist, auf welchem das Schaufelblatt angeordnet ist. Eine andere Beschreibung des Podestbereichs kann die gegenüber einem aerodynamisch idealen Schaufelblatt vorgesehene Aufdickung sein, was im Folgenden der Einfachheit halber genutzt wird. Mit anderen Worten ist vorgesehen, dass die Rissbeeinflussungseinrichtung wenigstens eine Ausrundung umfasst, die radial oberhalb eines Fillets, das im Anbindungsbereich des Schaufelblatts an den Schaufelfuß ausgebildet ist, angeordnet ist. Es ist eine Art "Doppelfillet" vorgesehen, indem zusätzlich zum Fillet im Anbindungsbereich des Schaufelblatts an das radial innere Deckband wenigstens eine weitere Ausrundung, d.h. einen anderen Profilbereich, der auch als ein weiteres Fillet mit positiver Querschnittsänderung bezeichnet werden kann, radial oberhalb des Fillets vorgesehen ist. Hierdurch kann eine Rissausbreitung insbesondere in Richtung des Schaufelfußes beziehungsweise radial nach unten hin besonders zuverlässig unterbunden werden. Durch einen derartigen "positiven" Steifigkeitssprung aufgrund der Materialverdickung können etwaig auftretende Risse besonders zuverlässig gestoppt oder verlangsamt und Schwingspannungen stark reduziert werden. Zusätzlich kann eine zumindest weitgehende Trennung von Umfangs- und Schwingspannungen erreicht werden. Dabei ist ferner vorgesehen, dass das Podest in radialer Richtung mindestens zwei aneinander angrenzende und voneinander verschiedene Profilbereiche umfasst. Mit anderen Worten umfasst das Podest mindestens zwei in radialer Richtung aneinandergereihte Profilbereiche, die unterschiedliche Geometrien aufweisen. Dies erlaubt eine besonders präzise Einstellung des radialen Steifigkeitsverlaufs. Der Profilübergangsbereich definiert zugleich eine insbesondere abgerundete Außenkante des Podests der Risslenkungseinrichtung, wobei der erste an das Schaufelblatt angrenzende Profilbereich eine Podestdicke in Umfangsrichtung definiert, während der zweite an den Rotorgrundkörper angrenzende Profilbereich eine Podesthöhe in radialer Richtung definiert. Die Bezeichnungen sind deshalb so gewählt, weil sich zum einen zwischen dem Profilübergangsbereich und dem ersten Profilbereich eine Kurvenverlaufsänderung einstellt, die in einer Querschnittsebene gesehen einen erkennbaren Punkt, insbesondere Wendepunkt ("Podestdickenpunkt") darstellt, so dass der Begriff "Podestdicke", gemessen von dem Schaufelblatt, insbesondere von dem aerodynamisch optimierten Schaufelblatt bis zu diesem Punkt, als sinnvoll erschien. Zum anderen wurde entsprechend der Begriff "Podesthöhe" gewählt, da sich zwischen dem Profilübergangsbereich und dem zweiten Profilbereich eine Kurvenverlaufsänderung einstellt, die in einer Querschnittsebene des Triebwerks gesehen einen erkennbaren Wendepunkt ("Podesthöhenpunkt") darstellt, so dass der Begriff "Podesthöhe", gemessen von dem Deckband bis zu diesem Punkt, ebenfalls als sinnvoll erschien. Fallen diese beiden Punkte, der Podestdickenpunkt und der Podesthöhenpunkt, zusammen und in dem Fall, dass die beiden Profilbereiche konkav ausgebildet sind, ergibt sich eine scharfe Kante, die in der Regel in der Luftfahrt nicht zulässig ist, so dass der Profilübergangsbereich vorzugsweise eine nach außen gewölbte, konvexe Kontur aufweist beziehungsweise Verrundung ist. Die Verrundung weist vorteilhaft einen Radius zwischen 0,5 und 2,5% der Schaufelhöhe auf. Denkbar ist auch eine Fase (wiederum mit abgerundeten Kanten). Durch die Gestaltung dieses Übergangsbereichs kann ebenfalls ein Riss beeinflusst werden. Insbesondere kann die Abrundung oder die Fase möglichst steil ausgebildet sein. Dabei ist vorzugsweise vorgesehen, dass die Podestdicke in axialer Richtung einen variablen Verlauf aufweist. Weiterhin kann die Schaufel vorteilhaft so ausgebildet sein, dass die Podesthöhe in axialer Richtung einen variablen Verlauf aufweist. Ferner kann die Rissbeeinflussungseinrichtung so ausgebildet sein, dass die Podestdicke und/oder die Podesthöhe auf der Saugseite einen anderen Verlauf aufweist als die Podestdicke auf der Druckseite.

Insbesondere durch die Wahl der Lage des Profilübergangsbereichs zwischen den zumindest zwei Profilbereichen ist es möglich eine Umfangsmittelspannung von einer Schwingspannung der Schaufel zu trennen. Bereiche erhöhter Fliehkraftbelastung treten häufig in Umfangsrichtung gesehen mittig in einem Übergangsbereich zwischen Schaufelblatt und Rotorgrundkörper auf, während die Schwingungsspannung an den Außenkonturen insbesondere an Konturübergängen auftritt.

In einer bevorzugten Ausführungsform der erfindungsgemäßen Schaufel ist vorgesehen, dass zwei aneinander angrenzende der mindestens zwei Profilbereiche einen Übergangswinkel zwischen 0° und 180°, bevorzugt zwischen 30° und 150°, besonders bevorzugt zwischen 60° und 120° und ganz besonders bevorzugt zwischen 75° und 105°, aufweisen. Durch den insbesondere nicht tangentialen Übergang zwischen den beiden Profilbereichen lässt sich eine effektive Rissbeeinflussungseinrichtung realisieren. Ferner lässt sich so auch der Profilübergangsbereich auf eine besonders einfache Weise gestalten. Darüber hinaus kann vorgesehen sein, dass der Übergangswinkel entlang der Erstreckung der Rissbeeinflussungseinrichtung um die Schaufel variiert.

Es hat sich daher gezeigt, wenn ein Verhältnis von Podestdicke zu maximaler Schaufeldicke vorliegt, das im Bereich von 15 bis 150 insbesondere im Bereich von 20 bis 100, ganz besonders bevorzugt im Bereich von 25 bis 75 liegt, dass sich ein vorteilhafter Mindestabstand zwischen Profilübergangsbereich und Schaufelfuß einstellt, der eine Rißausbreitung in Richtung auf die Scheibe besonders vorteilhaft beeinflusst, das heißt verlangsamt oder verhindert.

Ferner hat sich vorteilhaft gezeigt, dass ein Verhältnis von Podestdicke zu maximaler Umfangserstreckung des Schaufelfußes vorliegt, das im Bereich von 1% bis 10%, insbesondere im Bereich von 2% bis 9%, ganz besonders bevorzugt im Bereich von 3% bis 8% liegt. Hierdurch kann eine Rissausbreitung in Richtung der Scheibe verlangsamt und generell die Richtung eines auftretenden Risses im Anbindungsbereich günstig beeinflusst werden.

Weiterhin kann vorteilhaft vorgesehen sein, dass ein Verhältnis von Podesthöhe zu maximaler Schaufeldicke im Bereich von 4 bis 60 vorteilhaft im Bereich von 6 bis 40, und ganz besonders bevorzugt im Bereich von 8 bis 30 liegt. Dabei kann das Verhältnis auf Saug- und Druckseite unterschiedlich ausgeprägt sein. Die maximale Schaufeldicke kann auf einfache Weise direkt oberhalb der Rissbeeinflussungseinrichtung gemessen werden, sollte aber der besseren Genauigkeit halber bei Kenntnis des aerodynamisch optimierten Schaufelblattes in der Umfangsebene mit der radialen Lage des Podesthöhenpunktes ermittelt werden.

In einer bevorzugten Weiterbildung ist vorgesehen, dass ein Verhältnis von Schaufelsehnenlänge zu einer maximalen Podesthöhe im Bereich von 2 bis 60, vorteilhaft im Bereich von 4 bis 40, und ganz besonders bevorzugt im Bereich von 6 bis 20 liegt. Die maximale Podesthöhe ist die größte Podesthöhe aller Querschnitte durch die Schaufel.

Die Schaufel kann vorteilhaft ferner derart weitergebildet sein, dass zumindest ein erster Profilbereich der mindestens zwei Profilbereiche um die Schaufel in Strömungsrichtung zumindest teilweise verläuft. Der zumindest erste Profilbereich kann sich grundsätzlich entlang von 10 %, 15%, 20 %, 25 %, 30 %, 35 %, 40 %, 45 %, 50 %, 55 %, 60 %, 65 %, 70 %, 75 %, 80 %, 85 %, 90 %, 95 % oder 100 % des Gesamtumfangs des Schaufelblatts im betreffenden Bereich erstrecken, wobei entsprechende Zwischenwerte wie beispielsweise 50 %, 51 %, 52 %, 53 %, 54 %, 55 %, 56 %, 57 %, 58 %, 59 %, 60 % usw. als mitoffenbart anzusehen sind. Der erste Profilbereich kann grundsätzlich einen konstanten oder variablen Abstand zum Schaufelfuß aufweisen. Ebenso können zwei oder mehr derartige Profilbereiche vorgesehen sein, wodurch ein gewünschtes Sollbruchverhalten besonders exakt eingestellt werden kann.

Eine besonders zuverlässige Verhinderung einer Rissausbreitung wird in weiterer Ausgestaltung dadurch ermöglicht, dass die mindestens zwei Profilbereiche unterschiedliche konkave und/oder konvexe Radien oder unterschiedliche konkav und/oder konvex gekrümmte Oberflächen aufweisen und/oder dass die mindestens zwei Profilbereiche stetig und/oder unstetig aneinander angrenzen oder zueinander separiert angeordnet sind. Dies erlaubt auch eine besonders weitgehende Trennung von Umfangs- und Schwingspannungen in der Schaufel. Insbesondere kann vorgesehen sein, dass die Radien und/oder Oberflächen auf der Druckseite zu den Radien auf der Saugseite unterschiedlich ausgebildet sind. Dadurch kann auf vorteilhafte Weise ein axialer Verlauf mindestens einer der Größen Anstellwinkel, Anströmwinkel, Abströmwinkel, Staffelungswinkel, und andere von einer radialen Achse abweichende Winkel des Schaufelblatts bei der Gestaltung der Schaufel berücksichtigt werden. Durch die Verwendung von Radien als die das Podest und das Fillet definierende Größe ist eine besonders einfache Fertigung der Schaufeln durch entsprechende Fräser möglich. Gekrümmte Oberflächen haben den Vorteil, dass sie sich sehr exakt an die prognostizierten Spannungen anpassen lassen, um die Rissausbreitung zu beeinflussen.

Weitere Vorteile ergeben sich, indem die wenigstens eine Ausrundung der Rissbeeinflussungseinrichtung unmittelbar an das Fillet, das im Anbindungsbereich des Schaufelblatts an den Schaufelfuß ausgebildet ist, angrenzt oder vom Fillet, das im Anbindungsbereich des Schaufelblatts an den Schaufelfuß ausgebildet ist, radial beabstandet ist. Mit anderen Worten können die zwei oder mehr Fillets in radialer Richtung unmittelbar aneinander angrenzen oder beispielsweise durch ein Podest oder einen Bereich mit aerodynamisch optimiertem Querschnitt voneinander getrennt sein. Dies erlaubt eine hohe konstruktive Freiheit und erlaubt eine aerodynamische Optimierung der Rissbeeinflussungseinrichtung.

In einer weiteren vorteilhaften Ausgestaltung der Erfindung ist vorgesehen, dass die Rissbeeinflussungseinrichtung stetige Übergangsbereiche in angrenzende Schaufelbereiche besitzt. Durch diese Anpassung der an die Rissbeeinflussungseinrichtung angrenzenden Geometrien wird das Entstehen abrupter Strömungsabrisskanten vermieden.

In einer weiteren vorteilhaften Ausgestaltung der Erfindung ist vorgesehen, dass die Rissbeeinflussungseinrichtung wenigstens eine in axialer Richtung verlaufende Vertiefung in einem radial inneren Deckband umfasst. Mit anderen Worten weist die Schaufel im Bereich ihres Schaufelfußes eine in Richtung einer Drehachse, das heißt zwischen einem stromaufwärtigen und einem stromabwärtigen Endbereich der Schaufel verlaufende Vertiefung auf, die auch als Ausnehmung, Trench oder Rinne bezeichnet werden kann. Auch hierdurch kann eine vorteilhafte Trennung von Umfangs- und Schwingungsspannungen erreicht und eine etwaige Rissausbreitung behindert werden. Die Breite, Tiefe und axiale Erstreckung der Vertiefung kann individuell an den jeweiligen Schaufeltyp angepasst werden. Vorzugsweise erstreckt sich die Vertiefung über die gesamte axiale Länge des Schaufelfußes, wobei auch in diesem Fall angrenzende Geometrien vorzugsweise aerodynamisch angepasst werden, um keine abrupten Strömungsabrisskanten entstehen zu lassen. Grundsätzlich kann es auch vorgesehen sein, dass zwei nebeneinander anzuordnende Schaufeln miteinander korrespondierende beziehungsweise komplementäre Vertiefungen aufweisen.

Weitere Vorteile ergeben sich, indem die Rissbeeinflussungseinrichtung beiderseits des Schaufelblatts in axialer Richtung verlaufende Vertiefungen im radial inneren Deckband umfasst. Mit anderen Worten weist die Schaufel sowohl eine druckseitige als auch eine saugseitige Vertiefung im Deckband auf. Dies führt zu einer weiteren Verbesserung des Rissverhaltens und der aerodynamischen Eigenschaften.

Ein zweiter Aspekt der Erfindung betrifft eine Blisk beziehungsweise einen als Blisk ausgebildeten Rotor für eine Strömungsmaschine, umfassend wenigstens eine Schaufel gemäß dem ersten Erfindungsaspekt, die mit einem Rotorgrundkörper gekoppelt ist. Hierdurch wird das Rissfortschrittspotenzial des Rotors erfindungsgemäß verringert, da die Rissbeeinflussungseinrichtung der Schaufel aufgrund ihrer Querschnittsänderung zu einem lokalen Steifigkeitssprung führt, der ein Fortschreiten beziehungsweise Ausbreiten eines Risses behindert oder verunmöglicht. Vorzugsweise sind zwei, mehrere oder alle Schaufeln des Rotors gemäß dem ersten Erfindungsaspekt ausgebildet. Weitere Merkmale und die sich hieraus ergebenden Vorteile sind den Beschreibungen des ersten Erfindungsaspekts zu entnehmen.

Ein dritter Aspekt der Erfindung betrifft eine Strömungsmaschine, insbesondere ein Flugtriebwerk, umfassend wenigstens eine Schaufel gemäß dem ersten Erfindungsaspekt und/oder wenigstens einen Rotor gemäß dem zweiten Erfindungsaspekt. Hierdurch wird ein verringertes Rissfortschrittspotenzial der Schaufel beziehungsweise des Rotors erreicht. Weitere Merkmale und die sich hieraus ergebenden Vorteile sind den Beschreibungen des ersten und des zweiten Erfindungsaspekts zu entnehmen.

Ferner wird ein Verfahren zur Herstellung einer Schaufel an einer Rotorscheibe mit einer Risslenkungseinrichtung offenbart, wobei die Schaufel zwischen einem Fuß eines Schaufelblatts eine Risslenkungseinrichtung aufweist, wobei die Risslenkungseinrichtung einen ersten an das Schaufelblatt angrenzenden Profilbereich aufweist, wobei die Risslenkungseinrichtung einen zweiten an die Rotorscheibe angrenzenden Profilbereich aufweist, wobei zur Erzeugung des ersten Profilbereichs ein erster Fräser mit einem ersten Durchmesser verwendet wird und wobei zur Erzeugung des zweiten Profilbereichs vorzugsweise ebenfalls der erste Fräser oder ein zweiter Fräser mit einem von dem ersten Durchmesser verschiedenen zweiten Durchmesser verwendet wird. Dadurch kann vorteilhaft auf einfache und kostengünstige Weise eine Risslenkungseinrichtung an einer Schaufel an einer Rotorscheibe beziehungsweise an einer Schaufel einer Blisk hergestellt werden. Durch die Verwendung eines einzelnen Fräsers, lassen sich Bearbeitungsschritte einsparen. Durch die Verwendung zweier Fräser können Rohlinge von Blisken, die in geschmiedeter oder gegossener Form vorliegen, leicht nachbearbeitet werden. Insbesondere kann so eine Risseinlenkungseinrichtung präzise hergestellt werden, wobei insbesondere die Oberflächenbeschaffenheit weiterhin optimal an die Strömung angepasst ist. Zusätzlich kann so ein Profilübergangsbereich hergestellt werden, insbesondere mit dem ersten oder dem zweiten Fräser. Der Profilübergangsbereich kann in einem nachfolgenden Schritt durch einen weiteren Fräser nachbearbeitet werden, insbesondere derart, dass eine Rissausbreitung stärker in Strömungsrichtung als in radialer Richtung erfolgt. Schaufel, Rotorgrundkörper und Risslenkungseinrichtung können vor dem Fräsen bereits in einem ersten Schritt geschmiedet und/oder gegossen werden, so dass dann vorteilhaft nur noch eine leichte Nachbearbeitung mit den Frässchritten zur Erzeugung der präzisen Oberflächenstrukturen der Risslenkungseinrichtung nötig ist.

Bestimmte Aspekte der Erfindung, insbesondere die Krümmung der Oberflächen der oben angegebenen Profilbereiche, lassen sich auch so beschreiben, dass zwischen einem Schaufelfuß und einem Schaufelblatt eine konkav gekrümmte Oberfläche, beispielsweise ein Radius oder ein Spline, gezeichnet wird, dessen Anbindungspunkte tangential, d.h. stetig zur Außenkontur von Schaufelblatt und Schaufelfuß verlaufen. Die Risslenkungseinrichtung kann dann über einen oder mehrere Maximalwerte eines Abstandes zwischen dieser gekrümmten Oberfläche und einer Gesamtaußenkontur der Risslenkungseinrichtung definiert werden.

Weiterhin lassen sich bestimmte Aspekte der Erfindung, insbesondere der Profilübergangsbereich zwischen den Profilbereichen, dadurch beschreiben, dass in dem Profilübergangsbereich (in einem Schnitt senkrecht zur Längserstreckung der Schaufel) jeweils eine gedachte Verlängerungslinie der sich aus den Profiloberflächen ergebenden Kurven an den Stellen von Wendepunkten angelegt werden, wobei sich die beiden Verlängerungslinien außerhalb des Profilübergangsbereichs kreuzen. Die Wendepunkte sind in diesem Fall die Anbindungspunkte an den Profilübergangsbereich zwischen den zwei Profilbereichen. Die beiden Verlängerungslinien der Oberflächenkurven des ersten Profilbereichs und des zweiten Profilbereichs spannen dann einen Schnittwinkel auf, der in einem Bereich von 0° bis 180° liegt. Insbesondere kann der Schnittwinkel entlang der Längserstreckung der Schaufel variieren. Vorzugsweise weist der Schnittwinkel ein Maximum in einem vollständig ausgebildeten Profilbereich auf, und nimmt dann bis zu einem freien Bereich in einem Auslaufbereich vorzugsweise stetig ab. Es können auch mehrere lokale Maxima des Schnittwinkels vorliegen.

In einer besonderen Ausführungsform kann auf zumindest einem der Profilbereiche der Rissbeeinflussungseinrichtung eine Beschichtung aufgetragen sein, die die Rissausbreitung weiter beeinflusst. Die Beschichtung kann aus einem anderen Material als die darunter liegende Rissbeeinflussungseinrichtung hergestellt sein. Die Beschichtung kann Poren, Materialeinschlüsse oder Mikrorisse aufweisen, so dass die Rissausbreitung beeinflusst wird.

Weitere Merkmale der Erfindung ergeben sich aus den Ansprüchen, den Figuren und der Figurenbeschreibung. Die vorstehend in der Beschreibung genannten Merkmale und Merkmalskombinationen, sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen verwendbar, ohne den Rahmen der Erfindung zu verlassen. Es sind somit auch Ausführungen von der Erfindung als umfasst und offenbart anzusehen, die in den Figuren nicht explizit gezeigt und erläutert sind, jedoch durch separierte Merkmalskombinationen aus den erläuterten Ausführungen hervorgehen und erzeugbar sind. Es sind auch Ausführungen und Merkmalskombinationen als offenbart anzusehen, die somit nicht alle Merkmale eines ursprünglich formulierten unabhängigen Anspruchs aufweisen. Es sind darüber hinaus Ausführungen und Merkmalskombinationen, insbesondere durch die oben dargelegten Ausführungen, als offenbart anzusehen, die über die in den Rückbezügen der Ansprüche dargelegten Merkmalskombinationen hinausgehen oder von diesen abweichen. Dabei zeigt:
- Fig. 1: eine schematische und ausschnittsweise Perspektivansicht eines erfindungsgemäßen Rotors gemäß einem ersten Ausführungsbeispiel;
- Fig. 2: eine schematische frontale Schnittansicht einer der in Fig. 1 gezeigten Schaufeln im Bereich einer Rissbeeinflussungseinrichtung;
- Fig. 3: eine schematische frontale Schnittansicht einer Schaufel gemäß einem weiteren Ausführungsbeispiel;
- Fig. 4: eine schematische und ausschnittsweise Perspektivansicht eines erfindungsgemäßen Rotors gemäß einem zweiten Ausführungsbeispiel;
- Fig. 5: eine schematische und ausschnittsweise Perspektivansicht eines erfindungsgemäßen Rotors gemäß einem dritten Ausführungsbeispiel;
- Fig. 6: eine schematische Seitenansicht eines vierten Ausführungsbeispiels einer erfindungsgemäßen Schaufel;
- Fig. 6a-e: unterschiedliche Varianten des vierten Ausführungsbeispiels gemäß Fig. 6;
- Fig. 7: einen Querschnitt durch die erfindungsgemäße Schaufel gemäß Fig. 6;
- Fig. 8a: einen Querschnitt durch eine Rissbeeinflussungseinrichtung einer erfindungsgemäßen Schaufel; und
- Fig. 8b: eine Vergrößerung des Querschnitts aus Fig. 8a.

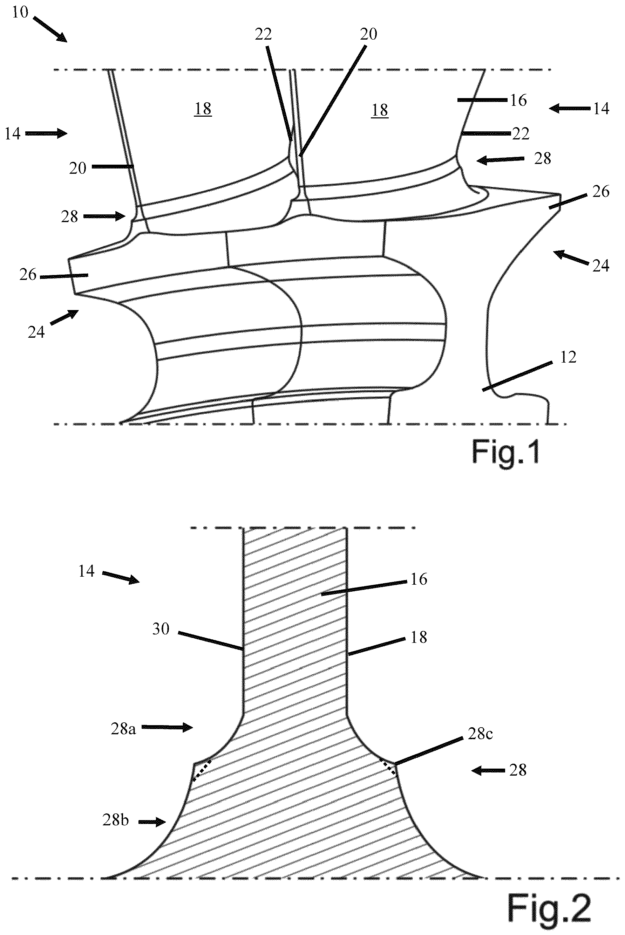

**Fig. 1** zeigt eine schematische und ausschnittsweise Perspektivansicht eines erfindungsgemäßen Rotors 10 gemäß einem ersten Ausführungsbeispiel. Der Rotor 10 ist vorliegend als Blisk (bladed disk) für ein Flugtriebwerk ausgebildet und umfasst einen scheibenförmigen Rotorgrundkörper 12, der integral mit Schaufeln 14 versehen ist. Exemplarisch ist in Fig. 1 ein Rotorsegment mit zwei Schaufeln 14 dargestellt, wobei die Schaufeln 14 vorliegend identisch ausgebildet sind. Grundsätzlich können zwei oder mehr Schaufeln 14 unterschiedlich ausgebildet und/oder zu einem Schaufelcluster zusammengefasst sein. Jede Schaufel 14 umfasst ein Schaufelblatt 16 mit einer Saugseite 18 und einer gegenüberliegenden Druckseite 30 (s. Fig. 2), die sich zwischen einer Vorderkante 20 und einer Hinterkante 22 des Schaufelblatts 16 erstrecken. Weiterhin umfasst jede Schaufel 14 einen Schaufelfuß 24, über welchen die jeweilige Schaufel 14 mit dem Rotorgrundkörper 12 verbunden ist. Im gezeigten Ausführungsbeispiel umfasst jeder Schaufelfuß 24 der Schaufeln 14 zudem ein radial inneres Deckband 26, welches im montierten Zustand des Rotors 10 im Flugtriebwerk einen Fluidpfad eines Betriebsfluids begrenzt. Grundsätzlich kann jede Schaufel 14 auch ein radial äußeres Deckband (nicht gezeigt) aufweisen.

Um einen Rissfortschritt in die Scheibe von eventuell auftretenden Rissen in den Schaufelblättern 16 zu verhindern, weist jede Schaufel 14 eine Rissbeeinflussungseinrichtung 28 auf, welche vorliegend als Podest ausgebildet ist, wobei das Podest zwischen dem Schaufelblatt 16 und dem Schaufelfuß 24 beziehungsweise dem Deckband 26 angeordnet ist und in radialer Richtung eine verdickte Querschnittsgeometrie gegenüber einem aerodynamisch optimierten Schaufelprofil besitzt. Diese spezielle Geometriegestaltung der Rissbeeinflussungseinrichtung 28 beeinflusst die Mittelspannung sowie die Schwingspannung im Übergangsbereich zwischen den Schaufeln 14 und dem Rotorgrundkörper 12. Die hohen Umfangsmittelspannungen im Rotorgrundkörper 12 werden damit von den hohen Schwingspannungen in den Schaufelblättern 16 getrennt. Auf diese Weise beeinflusst der Steifigkeitssprung durch die Rissbeeinflussungseinrichtung 28 die Ausbreitungsrichtung eines im Schaufelblatt 16 oder im Übergangsbereich zum Rotorgrundkörper 12 ausgehenden Risses. Im Zuge der Rissausbreitung wird entweder das Rissfortschrittspotenzial erweitert oder im Versagensfall lediglich die Schaufel 14 beziehungsweise das Schaufelblatt 16 abgetrennt. Ein Riss kann damit nicht mehr von der Schaufel 14 in den Rotorgrundkörper 12 wachsen.

**Fig. 2** zeigt eine schematische frontale Schnittansicht einer der in Fig. 1 gezeigten Schaufeln 14 im Bereich ihrer Rissbeeinflussungseinrichtung 28. Man erkennt, dass die Rissbeeinflussungseinrichtung 28 in radialer Richtung zwei aneinander angrenzende und unterschiedlich ausgebildete Profilbereiche 28a, 28b umfasst, deren Querschnittsdicke größer ist als die Querschnittsdicke des Schaufelblatts 16 im angrenzenden Bereich. Die zwei Profilbereiche 28a, 28b besitzen vorliegend unterschiedliche konkave Radien und grenzen unstetig in einem Übergangsbereich 28c über eine Ecke aneinander. Durch diese radiale und axiale Steifigkeitsverteilung können Umfangsund Schwingspannungen besonders effektiv getrennt werden. Die Profilbereiche 28a, 28b können grundsätzlich auch als Fillet bezeichnet werden, wodurch sich im vorliegenden Fall eine Art "Doppelfillet" ergibt. Es versteht sich, dass in dem Übergangsbereich 28c auch ein Radius oder ein Fase angeordnet sein kann, um eventuelle Oberflächenspannungen noch genauer zu beeinflussen und so einen möglichst idealen Kompromiss zwischen eine Risslenkung, der Aerodynamik des Bauteils und einer Festigkeit des Bauteils zu erzielen. In Fig. 2 ist in dem Übergangsbereich 28c beispielhaft eine Fase durch eine gestrichelte Linie angedeutet.

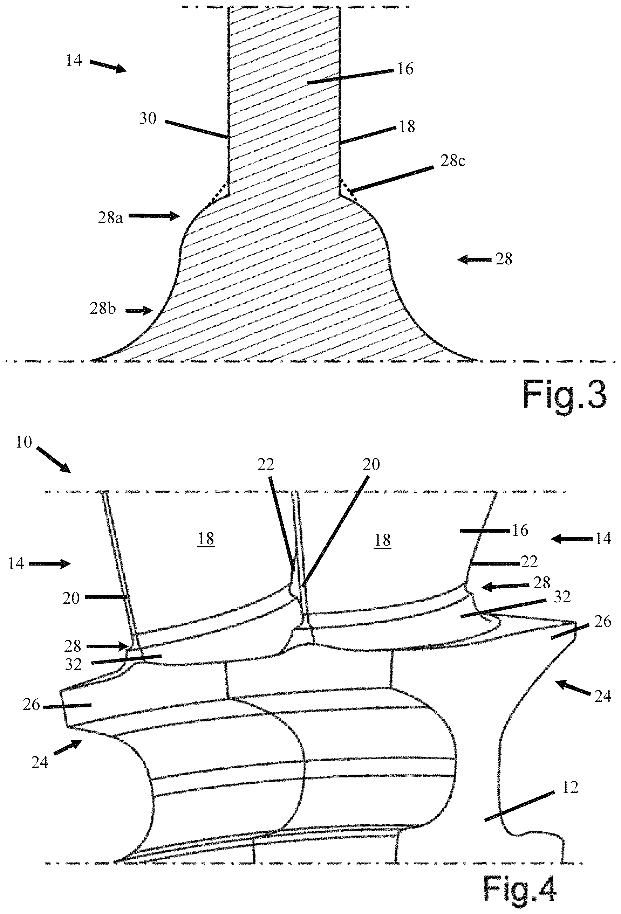

**Fig. 3** zeigt eine schematische frontale Schnittansicht einer Schaufel 14 gemäß einem weiteren Ausführungsbeispiel. Im Unterschied zum vorhergehenden Beispiel weist die Rissbeeinflussungseinrichtung 28 in radialer Richtung zwei aneinander angrenzende und unterschiedlich ausgebildete Profilbereiche 28a, 28b auf, wobei der Profilbereich 28a eine konvex gekrümmte Oberfläche, insbesondere einen konvexen Radius, und der Profilbereich 28b eine konkav gekrümmte Oberfläche, insbesondere einen konkaven Radius, besitzen. Zudem grenzen beide Profilbereiche 28a, 28b stetig aneinander an. Generell können für die Profilbereiche 28a, 28b zwei oder mehr konkave und/oder konvex gekrümmte Oberflächen, insbesondere Radien, vorgesehen sein, die über im Ausführungsbeispiel gemäß Fig. 3 als Ecken dargestellte Übergangsbereiche 28c aneinander angrenzen oder stetig ineinander übergehen. Es versteht sich, dass die Übergangsbereiche 28c auch durch einen Radius oder ein Fase oder eine Freiformfläche ausgebildet sein kann. Die Ausführungsform mit einer Fase ist andeutungsweise gestrichelt dargestellt.

**Fig. 4** zeigt eine schematische und ausschnittsweise Perspektivansicht eines erfindungsgemäßen Rotors 10 gemäß einem zweiten Ausführungsbeispiel. Der generelle Aufbau des Rotors 10 ist aus dem vorhergehenden Ausführungsbeispiel bekannt. Im Unterschied zum ersten Ausführungsbeispiel weist die Rissbeeinflussungseinrichtung 28 eine in axialer Richtung vollständig um das Schaufelblatt 16 laufende Vertiefung auf, die auch als Kerbe oder Groove bezeichnet werden kann und deren Querschnittsdicke kleiner ist als die Querschnittsdicke des Schaufelblatts 16 im angrenzenden Bereich. Man erkennt, dass die Vertiefung im radialen Übergangsbereich vom Schaufelfuß 24 beziehungsweise Deckband 26 zum Schaufelblatt 16 ausgebildet ist. Die konkave Vertiefung oder Kerbe kann grundsätzlich eine konstante oder variable radiale Höhe und/oder maximale Tiefe aufweisen und bildet eine Sollbruchstelle im Schaufelblatt 16. Zudem trägt sie zur Reduzierung von Schwingungsspannungen in einem radial darunterliegenden Fillet 32 sowie in den radial darunterliegenden Elementen Deckband 26, Schaufelfuß 24 und im Rotorgrundkörper 12 bei.

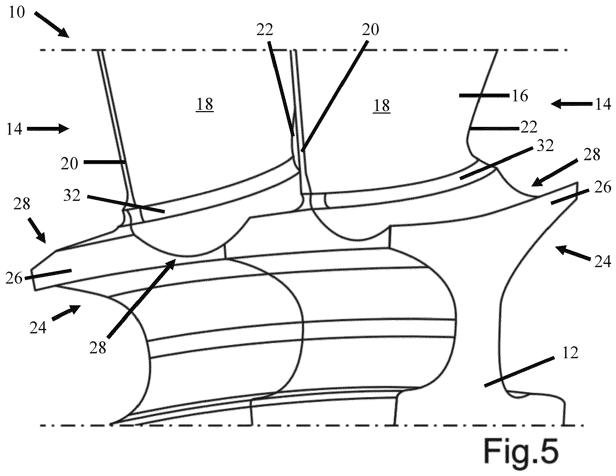

**Fig. 5** zeigt eine schematische und ausschnittsweise Perspektivansicht eines erfindungsgemäßen Rotors 10 gemäß einem dritten Ausführungsbeispiel. Auch hier ist der grundlegende Aufbau bereits aus den vorherigen Beschreibungen bekannt. Im Unterschied zu den vorhergehenden Ausführungsbeispielen umfasst die Rissbeeinflussungseinrichtung 28 jeder Schaufel 14 beiderseits des Schaufelblatts 16 in axialer Richtung verlaufende Vertiefungen im radial inneren Deckband 26, wobei aneinander angrenzende Vertiefungen, die auch als Trench bezeichnet werden können, von benachbarten Schaufeln 14 korrespondierend ausgebildet sind. Die Vertiefungen dienen ebenfalls zur Trennung von Umfangs- und Schwingspannungen und können hinsichtlich ihrer Geometrie (Breite, maximale Tiefe, axiale Erstreckung etc.) für den jeweiligen Anwendungsfall optimiert werden.

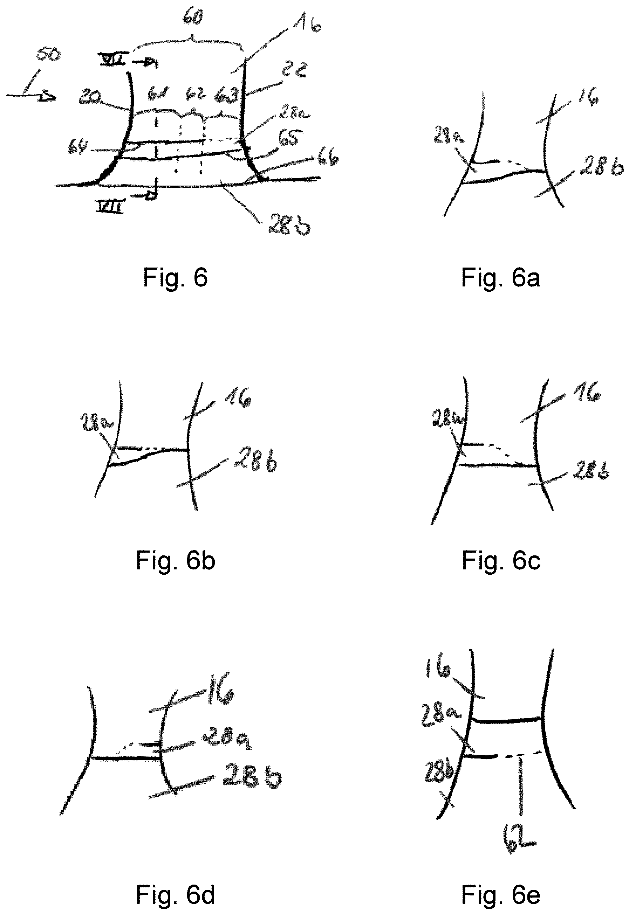

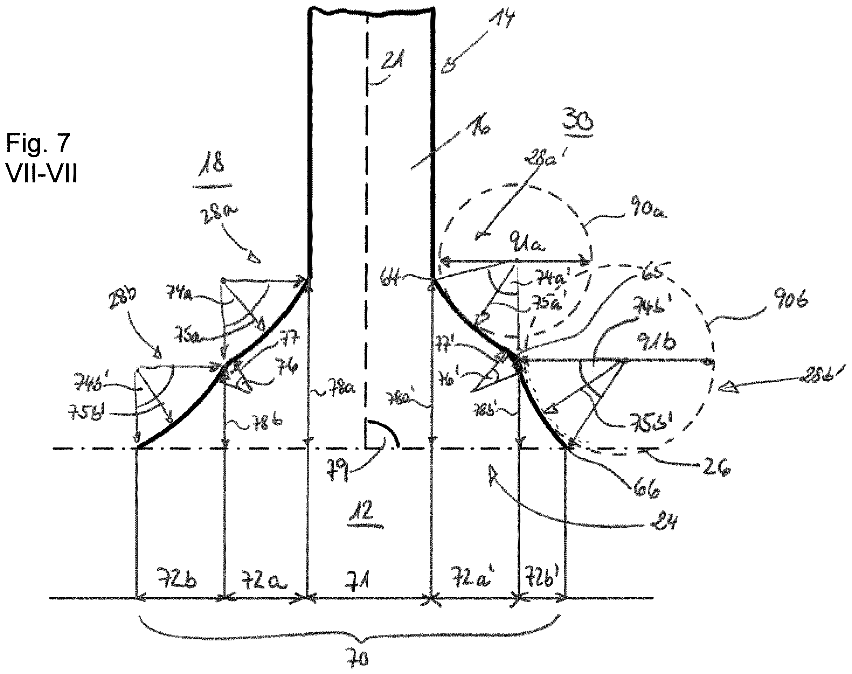

**Fig. 6** zeigt eine schematische Seitenansicht eines Schaufelblattes 16 einer Laufschaufel 14 eines Rotors 10 gemäß einem vierten Ausführungsbeispiel der Erfindung mit einem sich nur teilweise in axialer Richtung beziehungsweise in Strömungsrichtung 50 erstreckenden Vollbereich 61 des ersten Profilbereich 28a der Rissbeeinflussungseinrichtung 28, wobei in dem Vollbereich 61 des ersten Profilbereich 28a ein erstes Profil einer zumindest teilweise konkav gekrümmten Profiloberfläche vollständig beziehungsweise mindestens 90% ausgebildet ist. In dem gezeigten Ausführungsbeispiel ist der zweite Profilbereich 28b in dem Vollbereich 61 ebenfalls voll beziehungsweise mindestens zu 90% ausgebildet. Zu der Beschaffenheit der Profiloberfläche wird in Fig. 7 noch näher eingegangen. Das Schaufelblatt weist nach vorne hin in Strömungsrichtung 50, das heißt in axialer Richtung gesehen eine Vorderkante 20 und nach hinten hin in Strömungsrichtung 50 gesehen eine Hinterkante 22 auf. In einem mittleren Bereich des Schaufelblattes 16 befindet sich ein Auslaufbereich 62, in dem der erste Profilbereich 28a in einen freien Bereich 63 übergeht. Der freie Bereich 63 entspricht dabei im Wesentlichen einer strömungsmechanischen Idealform des Schaufelblattes mit einem die Außenkontur des Schaufelblattes nach außen hin verlagernden einfachen Fillet, oder anders ausgedrückt einem heutzutage meist verwendeten Standardfillet. Dabei ist der erste Profilbereich 28a gar nicht mehr ausgeprägt, während zumindest in dem vorliegenden Ausführungsbeispiel der zweite Profilbereich 28b immer noch voll beziehungsweise zu mindestens 90% ausgeprägt ist, so dass dieser Bereich keine Rissbeeinflussungseinrichtung 28 mehr vorliegt. Die Anordnung der Längserstreckung 61 des ersten Profilbereichs 28a, des Auslaufbereichs 62 und des freien Bereichs 63 kann dabei auch von der Hinterkante 22 zu der Vorderkante 20 verlaufen, wie dies beispielsweise in Fig. 6d gezeigt ist. Es kann auch vorgesehen sein, dass sich mehrere Auslaufbereiche 62 und Vollbereiche 61 alternierend abwechseln. Ferner kann vorgesehen sein, dass aufgrund einer erst in einem mittleren Bereich zu erwartenden, auftretenden höchsten Belastung, entsprechend eine Rissbeeinflussungseinrichtung 28 mit mehreren Profilbereichen 28a, 28b erst ab einer bestimmten axialen Erstreckung der Schaufel ausgebildet ist. Die Verläufe der den ersten Profilbereich 28a und den zweiten Profilbereich 28b beschreibenden Größen werden dabei noch anhand der Fig. 6a bis 6d und der Fig. 7 weiter unten näher erläutert. Sowohl der erste Profilbereich 28a als auch der zweite Profilbereich 28b weisen dabei vorliegend konkav gekrümmte Oberflächen auf, wobei der Verlauf dieser Flächen von den beiden vollständig ausgebildeten Profilbereich 61 über den Übergangsbereich 62 hin zu dem freien Bereich 63, in dem nur noch einer der beiden Profilbereich ausgebildet ist, fließend ist.

Zwischen dem ersten Profilbereich 28a und dem Schaufelblatt 16 ist ein erster Anbindungsbereich 64 vorgesehen, in dem die Außenkonturen des ersten Profilbereichs 28a und des Schaufelblatts 16 möglichst stetig ineinander übergehen; das heißt, dass die Außenkontur des ersten Profilbereichs 28a in dem ersten Anbindungsbereich 64 parallel zu einer Außenkontur des Schaufelblattes 16 verläuft. Dadurch wird verhindert, dass bereits ein Steifigkeitssprung entlang der gemeinsamen Außenkontur des ersten Profilbereichs 28a und des Schaufelblattes 16 auftritt. Der erste Anbindungsbereich 64 ist entlang der teilweisen Längserstreckung 61 des ersten Profilbereichs 28a vorgesehen und läuft in dem Auslaufbereich 62 aus, um schließlich in dem freien Bereich 63 ohne Profilierung gänzlich zu verschwinden. Dabei kann vorgesehen sein (nicht dargestellt), dass der erste Anbindungsbereich 64 in dem Auslaufbereich 62 in einen Profilübergangsbereich 65 stetig übergeht und kann in dem freien Bereich 63 von dem Profilübergangsbereich 65 nicht mehr differenziert werden. Der Profilübergangsbereich 65 befindet sich zwischen dem ersten Profilbereich 28a und dem zweiten Profilbereich 28b. Auch der Profilübergangsbereich 65 ist möglichst stetig ausgebildet, wobei der Profilübergangsbereich 65, insbesondere in dem Bereich 61 mit dem vollständig ausgebildeten ersten Profil 28a, eine konvexe Wölbung aufweist. Der erste und der zweite Profilbereich 28a, 28b bilden gemeinsam ein Doppelfillet.

Ein zweiter Anbindungsbereich 66 ist zwischen dem zweiten Profilabschnitt 28b und dem Deckband 26 beziehungsweise der Rotorgrundkörper 12 ausgebildet. Wobei der zweite Anbindungsbereich 66 eine Umschreibung für einen möglichst tangentialen Übergang von dem zweiten Profilabschnitt 28b auf den Rotorgrundkörper 12 ist.

In den **Fig. 6a bis 6d** sind unterschiedliche Verläufe des ersten Anbindungsbereichs 64 und des Profilübergangsbereichs 65 gezeigt. In Fig. 6a verlaufen der erste Anbindungsbereich 64 und der Profilübergangsbereich 65 in radialer Richtung aufeinander zu. In Fig. 6b verläuft der erste Anbindungsbereich 64 gerade entlang eines Profilschnitts der Schaufel 14 beziehungsweise entlang einer axialen Erstreckung des Schaufelblatts 16, während sich der Profilübergangsbereich 65 entlang der Strömungsrichtung in radialer Richtung dem ersten Anbindungsbereich 64 nähert und schließlich in diesen übergeht. In Fig. 6c verhält es sich umgekehrt zu der Fig. 6b, hier verläuft der Profilübergangsbereich 65 gerade entlang eines Profilschnitts, während sich der erste Anbindungsbereich 64 in radialer Richtung gesehen absenkt und dem Profilübergangsbereich 64 annähert und schließlich in diesen übergeht. Es kann auch vorgesehen sein, dass entweder nur der erste Anbindungsbereich 64 oder der Profilübergangsbereich 65 oder sowohl der erste Anbindungsbereich 64 als auch der Profilübergangsbereich 65 ganz oder teilweise entlang des Auslaufbereichs 62 in axialer Richtung ihre Ausprägung variieren beziehungsweise ihre weiter unten beschriebenen Größen ändern, so dass ein entsprechender Übergang der beiden Bereiche 64, 65 ineinander erfolgen kann.

Bevorzugt erstrecken sich der Bereich 61 des voll ausgeprägten ersten Profilbereichs 28a, 28a' über höchstens 30%, bevorzugt höchstens 40%, weiter bevorzugt höchstens 50%, insbesondere bevorzugt höchstens 60%, ganz besonders bevorzugt höchstens 70% entlang der axialen Erstreckung der Schaufel. Der Auslaufbereich 62 des ersten Profilbereichs 28a, 28a'schließt sich daran an und erstreckt sich mindestens über weitere 5%, bevorzugt 10%, besonders bevorzugt 15%, weiterhin bevorzugte 20% der axialen Erstreckung der Schaufel. Insbesondere bei kleineren Bereichen des voll ausgebildeten ersten Profilbereichs 28a, 28a' können längere Auslaufbereiche 62 sinnvoll sein, so dass sich auch Werte von über 20%, also 25%, 30%, 35%, 40% 45%, 50% ergeben können. Es kann sein, dass kein freier Bereich vorgesehen ist.

**Fig.6e** zeigt der Vollständigkeit halber einen zu Fig. 6 verschiedenen Anknüpfungspunkt und Verlauf des Anbindungsbereichs 62, der statt an den ersten Anbindungsbereich 64 an den Übergangsbereich 65 anknüpft und von dort das Doppelfillet definiert. Die in den Fig. 6a bis 6d gezeigten Ausführungsbeispiele können entsprechend auf diese Ausführungsform übertragen beziehungsweise gespiegelt werden.

**Fig. 7** zeigt eine Schnittansicht durch den Schnitt VII-VII der in Fig. 6 gezeigten Ausführungsform. Fig. 7 zeigt eine Reihe von Größen auf, die grundsätzlich auch für die Beschreibung der Fig. 1 bis 5 herangezogen werden können. Bei der Beschreibung werden Bezugszeichen, die ein Element auf der Druckseite bezeichnen zusätzlich durch einen Apostroph " ' " gekennzeichnet. Die Risslenkungseinrichtung 28, umfassend den ersten Profilbereich 28a auf der Saugseite 18, den zweiten Profilbereich 28b auf der Saugseite 18, den ersten Profilbereich 28a' auf der Druckseite 30, den zweiten Profilbereich 28b' auf der Druckseite 30, und das aerodynamisch optimal ausgebildete Schaufelblatt 16 weisen in Umfangsrichtung eine gemeinsame Gesamtbreite 70 an dem zweiten Anbindungsbereich auf. Dabei ist die Gesamtbreite 70 in Umfangsrichtung in die entsprechenden Umfangserstreckungen 71, 72a, 72b, 72a', 72b' der vorgenannten Komponenten unterteilt. Die Umfangserstreckung des ersten Profilbereichs 28a, 28a' wird dabei als Podestdicke 72a, 72a' der entsprechenden Saug- beziehungsweise Druckseite bezeichnet. Der Einfachheit betrifft das vorliegende Beispiel eine Schaufel ohne Anstellwinkel beziehungsweise mit einem Anstellwinkel von 0°, so dass die axiale Richtung der Strömungsmaschine parallel zu der der Schaufelsehne verläuft. Bei einer Übertragung der hier betrachteten Größen auf eine Schaufel mit angestelltem Profil sind die Größen entsprechend um den Anstellwinkel verdreht zu verwenden und/oder zu ermitteln.

Die Gesamtbreite 70 ist vorzugsweise besonders eng gewählt, so dass möglichst wenig Material verwendet wird und die Steifigkeit am Schaufelfuß nicht zu hoch wird. Gleichzeitig sollte durch die Rissbeeinflussungseinrichtung eine zweite Voraussetzung erfüllt werden, nämlich dass ein Riss sich nicht zu steil durch das Blatt bewegen kann, um nicht in den Bereich hoher Umfangsspannungen, in den meisten Fällen ist dies der Übergangsbereich von Schaufelblatt zur Scheibe, zu wachsen.

Die beiden Profilbereiche 28a und 28b grenzen in dem Profilübergangsbereich 65 aneinander, wobei auch hier vorzugsweise ein stetiger Übergang geschaffen werden sollte. Der Profilübergangsbereich 65 ist daher ebenfalls gekrümmt. Insbesondere ist der Profilübergangsbereich 65 konvex gekrümmt, um die Herstellung eines tangentialen beziehungsweise stetigen Übergangs von dem ersten Profilbereich 28a zu dem zweiten Profilbereich 28b zu vereinfachen und negative Auswirkungen auf die Strömung zu vermeiden. Der Profilübergangsbereich 65 weist in dem vorliegenden Ausführungsbeispiel einen Krümmungsradius 77 über einen Winkelbereich 76 auf, der vorzugsweise konstant sein kann. Der Krümmungsradius 77 kann über den Winkelbereich 76 und entlang der axialen Erstreckung der Risslenkungseinrichtung variieren, da an die Strömungsverhältnisse und die Rissausbreitung angepasste Freiflächen vorteilhaft gegenüber konstanten Radien sind. Ferner lässt sich dadurch die Herstellung noch einfacher realisieren, und darüber hinaus kann so auf besonders einfache Weise die Forderung nach einem stetigen Übergang erfüllt werden.

Eine maximale Krümmung 77 des Profilübergangsbereichs 65 ist dabei bevorzugt größer als eine maximale Krümmung 75a des ersten Profilbereichs 28a und/oder größer als eine maximale Krümmung 75b des zweiten Profilbereichs 28b. Ferner ist eine maximale Krümmung 75a des ersten Profilbereichs 28a größer als eine maximale Krümmung 76a des zweiten Profilbereichs 28b.

Es versteht sich, dass diese Aussagen für sowohl die Saugseite 18 als auch die Druckseite 30 gelten, wobei die Rissbeeinflussungseinrichtungen 28 der beiden Seiten 18, 30 voneinander unterschiedlich gestaltet werden können.

In Fig. 7 sind der Einfachheit halber beide Profilbereiche 28a und 28b durch einen Krümmungsradius 75a, 75b, 75a', 75b'dargestellt. Im Gegensatz oder ergänzend dazu können die Profilbereiche 28a und 28b bevorzugt durch konkave Freiformflächen gebildet sein. Die Krümmungsradien und/oder Freiformflächen der Profilbereiche erstrecken sich für jeden Querschnitt senkrecht zu der Drehachse der Strömungsmaschine über einen entsprechenden Winkelbereich 74a, 74b, 74a', 74b'und definieren so die konkaven Oberflächen der Profilbereiche 28a, 28b, 28a' und 28b'. Die Verläufe dieser Radien beziehungsweise Freiformflächen und Winkel in axialer Richtung können stetig variiert werden, um die in Fig. 6 und 6a bis 6e gezeigten Verläufe der Übergangsbereiche beziehungsweise der ersten Anbindungsbereiche zu realisieren. Generell kann vorgesehen sein, dass die Radien beziehungsweise maximale Krümmung der Freiformflächen und/oder Winkelbereiche der Profilbereiche 28a, 28b der Saugseite größer beziehungsweise stärker ausgeprägt sind als die korrespondierenden Radien beziehungsweise maximale Krümmung der Freiformflächen und/oder Winkelbereiche der Profilbereiche 28a', 28b' auf der Druckseite. Dies kann insbesondere in einem vorderen Bereich der Schaufel der Fall sein. Es ist insbesondere vorgesehen, dass der Radius 75a beziehungsweise 75a' beziehungsweise die Freiformfläche zumindest eines ersten Profilbereichs 28a, 28a' eine stärkere Krümmung als der Radius 75b, 75b' beziehungsweise die Freiformfläche des zweiten Profilbereichs 28b, 28b'auf derselben Druckseite 30 beziehungsweise Saugseite 18 aufweist.

In Fig. 7 ist ferner eine Staffellungslinie 21 der Profilschnitte des Schaufelblatts 16 gezeigt. Der den Verlauf dieser Linie 21 definierende Staffelungswinkel 79 ist beispielhaft an dem unteren radialen Ende des Schaufelblatts 16 eingetragen. Es versteht sich, dass dieser Winkel entlang der radialen Höhe variieren kann, so dass der Verlauf der Staffelungslinie 21 von der in Fig. 7 dargestellten geraden Form abweicht. In Abhängigkeit des Staffelungswinkels 79 beziehungsweise des Verlaufs der Staffelungslinie 21 können die Radien und Winkelbereiche der beiden Profilbereich 28a, 28b auf der Saugseite und der beiden Profilbereiche 28a', 28b' auf der Druckseite aufeinander abgestimmt werden.

Schließlich sind in Fig. 7 gestrichelte Kreis dargestellt, die den Einsatz von Fräsern zur Herstellung der beiden Profilbereiche beispielhaft verdeutlichen sollen. Das Herstellungsverfahren wird dabei mit den folgenden Schritten durchgeführt:
Es liegt zunächst ein Rohling einer Blisk, zum Beispiel als gegossenes und anschließend geschmiedetes Einzelteil oder zusammengeschweißtes Teil aus Schaufeln und Scheibe, vor. Um die Rissfortschrittseinrichtung herzustellen, wird der Rohling in beiden Bereichen mit einem ersten Fräser 90a mit dem ersten Radius 91a gefräst, um die Profilbereiche 28a, 28b, 28a', 28b' der Druckseite und/oder der Saugseite sowie den Profilübergangsbereich auszubilden. Es ist auch möglich, mehr als einen Fräser zu verwenden, dann kann in dem Bereich des ersten Profilbereichs 28a, 28a' zunächst durch einen Fräser 90a mit einem ersten Durchmesser 91a gefräst werden, und im Anschluss kann durch einen Fräser 90b mit einem zweiten Durchmesser 91b in dem Bereich des zweiten Profilbereichs 28b, 28b' gefräst werden. In einem weiteren Schritt kann ein weiterer Fräser (nicht gezeigt) einen Radius, eine Fase oder eine Freiformfläche an dem Profilübergangsbereich 65 fräsen.

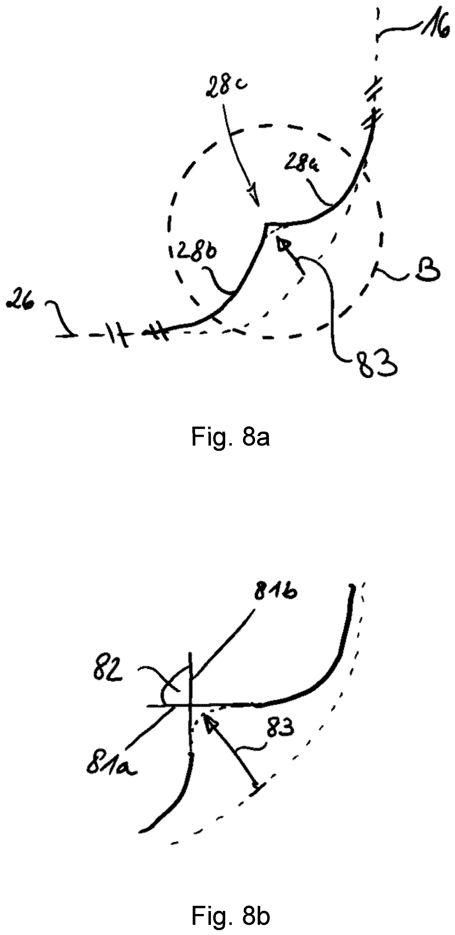

Fig. 8a zeigt einen Querschnitt einer Rissbeeinflussungseinrichtung im Schaufelfußbereich einer erfindungsgemäßen Schaufel. Die Rissbeeinflussungseinrichtung in diesem Ausführungsbeispiel weist zwei Profilbereiche 28a und 28b auf, die ähnlich zu den oben beschriebenen Ausführungsbeispielen ausgestaltet sind. Es ist ein gestrichelter Kreis B eingezeichnet, der den in Fig. 8b gezeigten Ausschnitt markiert. Die beiden Profilbereich 28a, 28b gehen in das angrenzende Schaufelblatt 16 beziehungsweise in das angrenzende Deckband 26 tangential über, was durch die zwei schräg zu den Strukturlinien eingezeichneten, aus zwei parallelen Linien bestehenden Symbole gezeigt ist. Im Gegensatz dazu ist vorgesehen, dass zwischen den beiden Profilbereichen 28a, 28b an dem Profilübergangsbereich 28c ein Übergangswinkel 82 ausgebildet ist, der zwischen 0° und 180° liegt und in dem schematisch gezeichneten Ausführungsbeispiel etwa 90° beträgt. Der Übergangswinkel 82 wird zwischen einer ersten Tangente 81a an dem ersten Profilbereich 28a und einer zweiten Tangente 81b an dem zweiten Profilbereich 28b gebildet. Die beiden Tangenten 81a, 81b werden dabei in dem gezeigten Querschnitt an den Anbindungspunkten der beiden Profilbereiche 28a, 28b zu dem Profilübergangsbereich 28c aufgetragen. Man sieht deutlich, dass die beiden Profilbereiche 28a, 28b nicht tangential in einander übergehen. Dadurch wird vorteilhaft ein Steifigkeitssprung erzielt. Darüber hinaus kann vorteilhaft durch eine geeignete Wahl der Winkel der beiden Tangenten 81a, 81b die Rissausbreitungsrichtung gezielt beeinflusst werden.

Der Übergangswinkel 82 kann entlang der Erstreckung der Rissbeeinflussungseinrichtung 28 um die Schaufel variieren. So kann der Übergangswinkel 82 in dem Vollbereich 61 einen maximalen Betrag annehmen. In dem Auslaufbereich 62 kann der Übergangswinkel 82 von dem maximalen Wert hin zu einem minimalen Wert variieren. Der Wert des Übergangswinkels 82 kann in dem Auslaufbereich 62 auch einen lokalen Maximalwert einnehmen. Der minimale Wert des Übergangswinkels 82 kann dann in dem freien Bereich 63 Null betragen.

Ferner ist in Fig. 8a und 8b ein Abstand 83 der Rissbeeinflussungseinrichtung zu einem Radius gezeigt. Der gestrichelt dargestellte Radius beginnt an dem Anbindungspunkt des ersten Profilbereichs 28a an dem Schaufelblatt 16 und endet an dem Deckband 26 an dem Anbindungspunkt des zweiten Profilbereichs 28b. Dabei geht der Radius tangential in das Schaufelblatt 16 und das Deckband 26 über. Der Abstand 83 ist stets die minimale Distanz eines Punktes auf den Profilbereichen 28, 28b beziehungsweise auf dem Profilübergangsbereich 28c zu dem Radius. Es kann auch vorgesehen sein, dass ein gemittelter Abstand 83 der Oberfläche der Rissbeeinflussungseinrichtung 28 zu dem Radius in einem Querschnitt etwa Null beträgt. Das heißt, dass der Abstand 83 in einigen Bereichen negativ ist. Dadurch kann bei etwa gleichem Materialgewicht eine Rissbeeinflussungseinrichtung geschaffen werden.

Der Abstand 83, insbesondere in dem Profilübergangsbereich 28c, kann entlang der Erstreckung der Rissbeeinflussungseinrichtung 28 um die Schaufel variieren. So kann ein Abstand 83, insbesondere in dem Profilübergangsbereich 28c, in dem Vollbereich 61 einen maximalen Betrag annehmen. In dem Auslaufbereich 62 kann der Abstand 83, insbesondere in dem Profilübergangsbereich 28c, von dem maximalen Wert hin zu einem minimalen Wert variieren. Der Wert des Abstandes 83 kann, insbesondere in dem Profilübergangsbereich 28c, in dem Auslaufbereich 62 auch einen lokalen Maximalwert einnehmen. Der minimale Wert des Abstandes 83 entlang der Erstreckung der Rissbeeinflussungseinrichtung 28 um die Schaufel kann dann in dem freien Bereich 63 Null betragen. Bei der Betrachtung des Verlaufs des Abstandes 83 um die Schaufel kann es sich bevorzugt immer um einen Abstand des Anbindungspunktes zwischen ersten Profilbereich 28a und dem Übergangsbereich 28c oder immer um einen Abstand des Anbindungspunktes zwischen dem zweiten Profilbereich 28b und dem Übergangsbereich 28c handeln.

Die in den Unterlagen angegebenen Parameterwerte zur Definition von Prozess- und Messbedingungen für die Charakterisierung von spezifischen Eigenschaften des Erfindungsgegenstands sind auch im Rahmen von Abweichungen - beispielsweise aufgrund von Messfehlern, Systemfehlern, DIN-Toleranzen und dergleichen - als vom Rahmen der Erfindung mitumfasst anzusehen.

### Bezugszeichenliste:

- 10: Rotor / Blisk
- 12: Rotorgrundkörper
- 14: Schaufel
- 16: Schaufelblatt
- 18: Saugseite
- 20: Vorderkante
- 21: Staffelungslinie
- 22: Hinterkante
- 24: Schaufelfuß
- 26: Deckband
- 28: Rissbeeinflussungseinrichtung
- 28a: erster Profilbereich (Saugseite)
- 28a': gegenüberliegender erster Profilbereich (Druckseite)
- 28b: zweiter Profilbereich (Saugseite)
- 28b': gegenüberliegender zweiter Profilbereich (Druckseite)
- 28c: Profilübergangsbereich
- 30: Druckseite
- 32: Fillet
- 50: Strömungsrichtung
- 60: Längserstreckung des Schaufelblattes beziehungsweise Sehnenlänge
- 61: Längserstreckung des Vollbereichs des ersten Profilbereichs
- 62: Längserstreckung des Auslaufbereichs
- 63: Längserstreckung des freien Bereichs
- 64: Erster Anbindungsbereich zwischen erstem Profilbereich und Schaufelblatt
- 65: Profilübergangsbereich
- 66: Zweiter Anbindungsbereich zwischen zweitem Profilbereich und Schaufelfuß
- 70: Umfangserstreckung des Schaufelfußes
- 71: Umfangserstreckung des Schaufelblatts
- 72a: Umfangserstreckung des ersten Profilbereichs (Saugseite), Podestdicke
- 72b: Umfangserstreckung des zweiten Profilbereichs (Saugseite)
- 72a': Umfangserstreckung des ersten Profilbereichs (Druckseite), Podestdicke
- 72b': Umfangserstreckung des zweiten Profilbereichs (Druckseite)
- 73: Radiale Schaufelhöhe
- 74a: Winkel des ersten Profilbereichs (Saugseite)
- 74a': Winkel des ersten Profilbereichs (Druckseite)
- 74b: Winkel des zweiten Profilbereichs (Saugseite)
- 74b': Winkel des zweiten Profilbereichs (Druckseite)
- 75a: (Maximaler) Radius des ersten Profilbereichs (Saugseite)
- 75a': (Maximaler) Radius des ersten Profilbereichs (Druckseite)
- 75b: (Maximaler) Radius des zweiten Profilbereichs (Saugseite), Podesthöhe
- 75b': (Maximaler) Radius des zweiten Profilbereichs (Druckseite), Podesthöhe
- 76: Winkel des Profilübergangsbereichs (Saugseite)
- 76': Winkel des Profilübergangsbereichs (Druckseite)
- 77: (Maximaler) Radius des Profilübergangsbereichs (Saugseite)
- 77': (Maximaler) Radius des Profilübergangsbereichs (Druckseite)
- 78a: Höhe des Gesamtprofilbereichs (Saugseite)
- 78a': Höhe des Gesamtprofilbereichs (Druckseite)
- 78b: Höhe des zweiten Profilbereichs (Saugseite)
- 78b': Höhe des zweiten Profilbereichs (Druckseite)
- 79: Neigungswinkel der Staffelungslinie
- 81a: Tangente des ersten Profilbereichs
- 81b: Tangente des zweiten Profilbereichs
- 82: Übergangswinkel
- 83: Abstand zwischen Standard- und Doppelfillet
- 90a: Fräser des ersten Profilbereichs
- 91a: Durchmesser des Fräsers des ersten Profilbereichs
- 90b: Fräser des zweiten Profilbereichs
- 91b: Durchmesser des Fräsers des zweiten Profilbereichs

## Patentansprüche

1. Schaufel (14) für eine Strömungsmaschine, umfassend
ein Schaufelblatt (16) mit einer Saugseite (18) und einer Druckseite (30), die sich zwischen einer Vorderkante (20) und einer Hinterkante (22) des Schaufelblatts (16) erstrecken, sowie
einen Schaufelfuß (24) zur Anbindung der Schaufel (14) an einen Rotorgrundkörper (12),
wobei die Schaufel (14) eine Rißbeeinflussungseinrichtung (28) umfasst, welche in zumindest radialer Richtung und/oder Umfangsrichtung eine veränderte Querschnittsgeometrie gegenüber einem aerodynamisch optimierten Schaufelprofil aufweist, **dadurch gekennzeichnet dass** die Rissbeeinflussungseinrichtung (28) mindestens zwei Profilbereiche (28a, 28b) zumindest teilweise entlang der Druckseite (30) und/oder der Saugseite (18) aufweist, und wobei zumindest ein erster Profilbereich (28a) der mindestens zwei Profilbereiche (28a, 28b) um die Schaufel (14) von einer Schaufelvorderkante (20) zu einer Schaufelhinterkante (22) zumindest teilweise verläuft, so dass ein Vollbereich (61), ein Auslaufbereich (62) und ein von der Rissbeeinflussungseinrichtung (28) freier Bereich (63) ausgebildet sind, und wobei die Ausdehnung des Vollbereichs (61) entlang der axialen Erstreckung der Druckseite (30) und/oder der Saugseite (18) in einem Bereich liegt, der mindestens 30% der Erstreckung der Druckseite (30) beziehungsweise der Saugseite (18) entspricht, und/oder dass die Ausdehnung des freien Bereichs (63) entlang der axialen Erstreckung der Druckseite (30) und/oder der Saugseite (18) in einem Bereich liegt, der mindestens 5% der Erstreckung der Druckseite (30) beziehungsweise der Saugseite (18) entspricht.

2. Schaufel (14) nach Anspruch 1, **dadurch gekennzeichnet,**
**dass** die Rissbeeinflussungseinrichtung (28) wenigstens eine das Schaufelblatt (16) in axialer Richtung teilweise oder vollständig umlaufende Vertiefung umfasst.

3. Schaufel (14) nach Anspruch 1 oder 2, **dadurch gekennzeichnet,**
**dass** die Rissbeeinflussungseinrichtung (28) ein Podest umfasst,
**dass** das Podest zwischen dem Schaufelblatt (16) und dem Schaufelfuß (24) angeordnet ist und eine größere Querschnittsdicke als das Schaufelblatt (16) aufweist, und
**dass** das Podest mindestens zwei Profilbereiche (28a, 28b) umfasst, die insbesondere voneinander verschieden sind.

4. Schaufel (14) nach Anspruch 3, **dadurch gekennzeichnet,**
**dass** zwei aneinander angrenzende der mindestens zwei Profilbereiche (28a, 28b) einen Übergangswinkel (82) zwischen 0° und 180°, bevorzugt zwischen 30° und 150°, besonders bevorzugt zwischen 60° und 120° und ganz besonders bevorzugt zwischen 75° und 105°, aufweisen.

5. Schaufel (14) nach Anspruch 3 oder 4 mit einer maximalen Schaufeldicke (71), **dadurch gekennzeichnet,**
**dass** ein Verhältnis von Podestdicke (72a) zu der maximalen Schaufeldicke (71) vorliegt, das im Bereich von 15 bis 150, insbesondere im Bereich von 20 bis 100, ganz besonders bevorzugt im Bereich von 25 bis 75 liegt, insbesondere liegt das Verhältnis von Podestdicke (72a) zu maximaler Schaufeldicke (71) über die gesamte axiale Längserstreckung wenigstens einem der Profilbereiche (28a, 28b) vor.

6. Schaufel (14) nach einem der Ansprüche 3 bis 5 mit einer maximalen Umfangserstreckung des Schaufelfußes, **dadurch gekennzeichnet,**
**dass** ein Verhältnis von Podestdicke (72a) zu der maximalen Umfangserstreckung des Schaufelfußes (70) vorliegt, das im Bereich von 1% bis 10%, insbesondere im Bereich von 2% bis 9%, ganz besonders bevorzugt im Bereich von 3% bis 8% liegt.

7. Schaufel (14) nach einem der Ansprüche 3 bis 6, **dadurch gekennzeichnet,**
**dass** ein Verhältnis von Podesthöhe (78b) zu maximaler Schaufeldicke (71) im Bereich von 4 bis 60, vorteilhaft im Bereich von 6 bis 40, und ganz besonders bevorzugt im Bereich von 8 bis 30 liegt.

8. Schaufel (14) nach einem der Ansprüche 3 bis 7 mit einer Schaufelsehnenlänge (60), **dadurch gekennzeichnet,**
**dass** ein Verhältnis von Schaufelsehnenlänge (60) zu einer maximalen Podesthöhe (78b) im Bereich von 2 bis 60, vorteilhaft im Bereich von 4 bis 40, und ganz besonders bevorzugt im Bereich von 6 bis 20 liegt.

9. Schaufel (14) nach einem der Ansprüche 1 bis 8, **dadurch gekennzeichnet,**
**dass** die Ausdehnung des Vollbereichs (61) entlang der axialen Erstreckung der Druckseite (30) und/oder der Saugseite (18) in einem Bereich liegt, der mindestens 40%, vorteilhaft mindestens 50%, der Erstreckung der Druckseite (30) beziehungsweise der Saugseite (18) entspricht, und/oder
**dass** die Ausdehnung des freien Bereichs (63) entlang der axialen Erstreckung der Druckseite (30) und/oder der Saugseite (18) in einem Bereich liegt, der mindestens 10%, vorteilhaft mindestens 20%, der Erstreckung der Druckseite (30) beziehungsweise der Saugseite (18) entspricht.

10. Schaufel (14) nach einem der Ansprüche 3 bis 9, **dadurch gekennzeichnet,**
**dass** die mindestens zwei Profilbereiche (28a, 28b) unterschiedliche konkave und/oder konvexe Oberflächen aufweisen und/oder dass die mindestens zwei Profilbereiche (28a, 28b) stetig und/oder unstetig aneinander angrenzen.

11. Schaufel (14) nach einem der Ansprüche 1 bis 10, **dadurch gekennzeichnet,**
**dass** die Rissbeeinflussungseinrichtung (28) wenigstens eine Ausrundung umfasst, die radial oberhalb eines Fillets (32), das im Anbindungsbereich des Schaufelblatts (16) an den Schaufelfuß (24) ausgebildet ist, angeordnet ist.

12. Schaufel (14) nach einem der Ansprüche 1 bis 11, **dadurch gekennzeichnet,**
**dass** die Rissbeeinflussungseinrichtung (28) wenigstens eine in axialer Richtung verlaufende Vertiefung in einem radial inneren Deckband (26) umfasst.

13. Blisk (10) für eine Strömungsmaschine, umfassend wenigstens eine Schaufel (14) gemäß einem der Ansprüche 1 bis 12, die mit einem Rotorgrundkörper (12) gekoppelt ist.

14. Strömungsmaschine, insbesondere Flugtriebwerk, umfassend wenigstens eine Schaufel (14) gemäß einem der Ansprüche 1 bis 12 und/oder wenigstens eine Blisk (10) gemäß Anspruch 13.

## Claims

1. Blade (14) for a turbomachine, comprising an airfoil (16) having a suction side (18) and a pressure side (30) which extend between a leading edge (20) and a trailing edge (22) of the airfoil (16), and a blade root (24) for connecting the blade (14) to a main rotor body (12), the blade (14) comprising a crack affecting device (28) which has a changed cross-sectional geometry, at least in the radial direction and/or the circumferential direction, by comparison with an aerodynamically optimized blade profile, **characterized in that** the crack affecting device (28) has at least two profile regions (28a, 28b) at least in part along the pressure side (30) and/or the suction side (18), at least one first profile region (28a) of the at least two profile regions (28a, 28b) extending around the blade (14) at least in part, from a blade leading edge (20) to a blade trailing edge (22), such that a full region (61), an outlet region (62) and a region (63) free from the crack affecting device (28) are formed, and the extension of the full region (61) along the axial extent of the pressure side (30) and/or of the suction side (18) being in a range which corresponds to at least 30% of the extent of the pressure side (30) or of the suction side (18), respectively, and/or **in that** the extension of the free region (63) along the axial extent of the pressure side (30) and/or of the suction side (18) is in a range which corresponds to at least 5% of the extent of the pressure side (30) or of the suction side (18), respectively.

2. Blade (14) according to claim 1, **characterized in that** the crack affecting device (28) comprises at least one recess which partially or completely extends around the airfoil (16) in the axial direction.

3. Blade (14) according to either claim 1 or claim 2, **characterized in that** the crack affecting device (28) comprises a platform, **in that** the platform is arranged between the airfoil (16) and the blade root (24) and has a greater cross-sectional thickness than the airfoil (16), and **in that** the platform comprises at least two profile regions (28a, 28b) which are in particular different from one another.

4. Blade (14) according to claim 3, **characterized in that** two adjoining profile regions of the at least two profile regions (28a, 28b) have a transition angle (82) between 0° and 180°, preferably between 30° and 150°, particularly preferably between 60° and 120° and very particularly preferably between 75° and 105°.

5. Blade (14) according to either claim 3 or claim 4, having a maximum blade thickness (71), **characterized in that** there is a ratio of the platform thickness (72a) to the maximum blade thickness (71), which ratio is in the range of 15 to 150, in particular in the range of 20 to 100, very particularly preferably in the range of 25 to 75; in particular the ratio of platform thickness (72a) to maximum blade thickness (71) is present over the entire axial longitudinal extent of at least one of the profile regions (28a, 28b).

6. Blade (14) according to any of claims 3 to 5, having a maximum circumferential extent of the blade root, **characterized in that** there is a ratio of platform thickness (72a) to the maximum circumferential extent of the blade root (70), which ratio is in the range of 1% to 10%, in particular in the range of 2% to 9%, very particularly preferably in the range of 3% to 8%.

7. Blade (14) according to any of claims 3 to 6, **characterized in that** a ratio of platform height (78b) to maximum blade thickness (71) is in the range of 4 to 60, advantageously in the range of 6 to 40, and very particularly preferably in the range of 8 to 30.

8. Blade (14) according to any of claims 3 to 7, having a chord length (60), **characterized in that** a ratio of chord length (60) to a maximum platform height (78b) is in the range of 2 to 60, advantageously in the range of 4 to 40, and very particularly preferably in the range of 6 to 20.

9. Blade (14) according to any of claims 1 to 8, **characterized in that** the extension of the full region (61) along the axial extent of the pressure side (30) and/or of the suction side (18) is in a range which corresponds to at least 40%, advantageously at least 50%, of the extent of the pressure side (30) or of the suction side (18), respectively, and/or **in that** the extension of the free region (63) along the axial extent of the pressure side (30) and/or of the suction side (18) is in a range which corresponds to at least 10%, advantageously at least 20%, of the extent of the pressure side (30) or of the suction side (18), respectively.

10. Blade (14) according to any of claims 3 to 9, **characterized in that** the at least two profile regions (28a, 28b) have different concave and/or convex surfaces, and/or **in that** the at least two profile regions (28a, 28b) adjoin one another continuously and/or discontinuously.

11. Blade (14) according to any of claims 1 to 10, **characterized in that** the crack affecting device (28) comprises at least one rounded portion which is arranged radially above a fillet (32) which is formed in the connection region of the airfoil (16) to the blade root (24).

12. Blade (14) according to any of claims 1 to 11, **characterized in that** the crack affecting device (28) comprises at least one recess in a radially inner shroud (26), which recess extends in the axial direction.

13. Bladed disk (10) for a turbomachine, comprising at least one blade (14) according to any of claims 1 to 12, which blade is coupled to a main rotor body (12).

14. Turbomachine, in particular an aircraft engine, comprising at least one blade (14) according to any of claims 1 to 12, and/or at least one bladed disk (10) according to claim 13.

## Revendications

1. Aube (14) pour une turbomachine, comprenant une pale d'aube (16) comportant un côté aspiration (18) et un côté refoulement (30) s'étendant entre un bord avant (20) et un bord arrière (22) de la pale d'aube (16), ainsi qu'un pied d'aube (24) permettant de relier l'aube (14) à un corps de base de rotor (12), l'aube (14) comprenant un dispositif agissant sur les fissures (28), lequel présente, au moins dans la direction radiale et/ou dans la direction circonférentielle, une géométrie de section transversale modifiée par rapport à un profil d'aube optimisé du point de vue aérodynamique, **caractérisée en ce que** le dispositif agissant sur les fissures (28) comporte au moins deux zones de profil (28a, 28b) au moins partiellement le long du côté refoulement (30) et/ou du côté aspiration (18), et dans laquelle au moins une première zone de profil (28a) des au moins deux zones de profil (28a, 28b) s'étend au moins partiellement autour de l'aube (14), d'un bord avant (20) à un bord arrière (22) de l'aube, de sorte qu'il se forme une zone pleine (61), une zone de sortie (62) et une zone (63) exempte du dispositif agissant sur les fissures (28), et dans laquelle l'étendue de la zone pleine (61) le long de l'extension axiale du côté refoulement (30) et/ou du côté aspiration (18) se trouve dans une zone qui correspond à au moins 30 % de l'extension du côté refoulement (30) ou du côté aspiration (18), et/ou l'étendue de la zone libre (63) le long de l'extension axiale du côté refoulement (30) et/ou du côté aspiration (18) se trouve dans une zone qui correspond à au moins 5 % de l'extension du côté refoulement (30) ou du côté aspiration (18).

2. Aube (14) selon la revendication 1, **caractérisée en ce que** le dispositif agissant sur les fissures (28) comprend au moins un évidement entourant partiellement ou entièrement l'aube (16) dans la direction axiale.

3. Aube (14) selon la revendication 1 ou 2, **caractérisée en ce que** le dispositif agissant sur les fissures (28) comprend un piédestal, **en ce que** le piédestal est disposé entre la pale d'aube (16) et le pied d'aube (24) et a une épaisseur de section transversale supérieure à celle de la pale d'aube (16), et **en ce que** le piédestal comprend au moins deux zones de profil (28a, 28b) qui sont en particulier différentes.

4. Aube (14) selon la revendication 3, **caractérisée en ce que** deux zones de profil adjacentes des au moins deux zones de profil (28a, 28b) présentent un angle de transition (82) compris entre 0 et 180°, de préférence entre 30 et 150°, de manière particulièrement préférée entre 60 et 120° et mieux encore entre 75 et 105°.

5. Aube (14) selon la revendication 3 ou 4, ayant une épaisseur d'aube maximale (71), **caractérisée en ce qu'**il existe un rapport entre l'épaisseur de piédestal (72a) et l'épaisseur d'aube maximale (71), lequel rapport est compris entre 15 et 150, en particulier entre 20 et 100, mieux encore entre 25 et 75, le rapport entre l'épaisseur de piédestal (72a) et l'épaisseur d'aube maximale (71) étant en particulier présent sur toute l'extension longitudinale axiale d'au moins l'une des zones de profil (28a, 28b).

6. Aube (14) selon l'une des revendications 3 à 5, comportant une extension circonférentielle maximale du pied d'aube, **caractérisée en ce qu'**il existe un rapport entre l'épaisseur de piédestal (72a) et l'extension circonférentielle maximale du pied d'aube (70), lequel rapport est compris entre 1 et 10 %, en particulier entre 2 et 9 %, mieux encore entre 3 et 8%.

7. Aube (14) selon l'une des revendications 3 à 6, **caractérisée en ce que** le rapport entre la hauteur de piédestal (78b) et l'épaisseur d'aube maximale (71) est compris entre 4 et 60, avantageusement entre 6 et 40, et mieux encore entre 8 et 30.

8. Aube (14) selon l'une des revendications 3 à 7, ayant une longueur de corde d'aube (60), **caractérisée en ce qu'**un rapport entre la longueur de corde d'aube (60) et une hauteur de piédestal maximale (78b) est compris entre 2 et 60, avantageusement entre 4 et 40, et mieux encore entre 6 et 20.

9. Aube (14) selon l'une des revendications 1 à 8, **caractérisée en ce que** l'étendue de la zone pleine (61) le long de l'extension axiale du côté refoulement (30) et/ou du côté aspiration (18) se trouve dans une zone qui correspond à au moins 40 %, avantageusement à au moins 50 % de l'extension du côté refoulement (30) ou du côté aspiration (18), et/ou **en ce que** l'étendue de la zone libre (63) le long de l'extension axiale du côté refoulement (30) et/ou du côté aspiration (18) se trouve dans une zone qui correspond à au moins 10 %, avantageusement à au moins 20 % de l'extension du côté refoulement (30) et/ou du côté aspiration (18).

10. Aube (14) selon l'une des revendications 3 à 9, **caractérisée en ce que** les au moins deux zones de profil (28a, 28b) comportent des surfaces concaves et/ou convexes différentes et/ou **en ce que** les au moins deux zones de profil (28a, 28b) se jouxtent de manière continue et/ou discontinue.

11. Aube (14) selon l'une des revendications 1 à 10, **caractérisée en ce que** le dispositif agissant sur les fissures (28) comprend au moins un arrondissage qui est disposé radialement au-dessus d'un filet (32) réalisé dans la zone de liaison de la pale d'aube (16) sur le pied d'aube (24).

12. Aube (14) selon l'une des revendications 1 à 11, **caractérisée en ce que** le dispositif agissant sur les fissures (28) comprend au moins un évidement s'étendant axialement dans une bande de recouvrement (26) radialement intérieure.

13. Disque aubagé monobloc (10) pour une turbomachine, comprenant au moins une aube (14) selon l'une des revendications 1 à 12, laquelle est couplée à un corps de base de rotor (12).

14. Turbomachine, en particulier moteur d'avion, comprenant au moins une aube (14) selon l'une des revendications 1 à 12 et/ou au moins un disque aubagé monobloc (10) selon la revendication 13.
